(19) **Europäisches Patentamt**
**European Patent Office**
**Office européen des brevets**

(11) **EP 3 706 053 A1**

(12) **EUROPEAN PATENT APPLICATION**

(43) Date of publication:
**09.09.2020 Bulletin 2020/37**

(51) Int Cl.:
***G06Q 10/06*** *(2012.01)*     ***G06Q 50/30*** *(2012.01)*
***G06Q 10/10*** *(2012.01)*

(21) Application number: **20161172.0**

(22) Date of filing: **05.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.03.2019 US 201916293376**

(71) Applicant: **Statgraf Research LLP
Richmond, British Columbia V6Y 1Z3 (CA)**

(72) Inventor: **SEN, Prabir
Glenview, IL Illinois 60025 (US)**

(74) Representative: **Murgitroyd & Company
Murgitroyd House
165-169 Scotland Street
Glasgow G5 8PL (GB)**

(54) **COGNITIVE SYSTEM**

(57) A system for detecting activities and changes in the activities of a user and dynamically performing an action is described. The system comprises a knowledge processor that uses explicit and tacit knowledge, based on cognitive and context data related to an activity to forecast and optimizing future decisions.The system comprises a data receiver to receive data for an action from an access device, the data comprising transactional data associated with contextual information, a scheduler to capture cognitive and context data from the data, per-

form an activity in response to the action and render activity data associated with the activity. Further, the system comprises an activity monitor to detect a change in one of the action and activity, a forecaster to predict multiple options for a target activity, a trade-off analyzer to perform analysis on the data and the activity data, and a prescriptive engine to identify an option from amongst the multiple options as a target activity to be performed in response to the change.

FIG. 5

**Description**

BACKGROUND

Generally, electronic devices, such as mobile phones, computers, laptops, and tablets have multiple applications for performing various tasks for a user. The applications may be related to sending or receiving emails, calendar, online shopping, travel booking, hotel reservations or cab and taxi booking, and route navigation. The user may interact with one or more applications by providing some information and receive an output. For example, the user may provide information related to a current location and a destination location to a route navigation application and the application may determine an appropriate route. The user may also provide information related to availability to a meeting application for booking a meeting slot.

In addition to the output generated by the applications, other data may also be generated and saved for later use. For instance, the route navigation application may determine a preferred route for the user and save it for later use and the meeting application may determine a preferred meeting location and time for the user. The saved data may be used for providing recommendations to the user.

Conventionally, the information and the data are stored at an application layer level and not at an operating system level of a device. The route navigation application of a mobile device may store the current location, the destination location, and the preferred route for the user within the application and the meeting application on the mobile device may store the availability and preferred location and time for the user within the meeting application, and not at the operating system of the mobile device. The storing of the data and the information at the operating system may enable access of the data to multiple applications. For instance, the data and information stored by the route navigation application may be accessed by the meeting application. The meeting application may accordingly book a meeting for the user at the destination location.

Further, the activities performed by the user with the applications may change over time. The meeting time may be changed due to unavailability of other members and the preferred route may have to be changed due to high traffic.

Existing systems do not dynamically capture data and information related to activities of the user to perform additional activities. The existing systems do not allow accessing data and information stored by other applications and detecting changes in the activities performed by the user. The systems are generally passive and operate upon receiving a user input. The user may have to manually feed the change in the application to perform an additional activity. For instance, the user may have to provide a new meeting time to book a new meeting slot.

The existing systems are therefore inefficient and lack intelligence in terms of capturing cognitive or contextual data, dynamically detecting changes and performing additional activities accordingly. In absence of the cognitive and contextual information, the suggestion or recommendation available through an application may not always be complete and appropriate for the user.

This presents a technical problem of efficiently capturing data related to the activities and detecting changes in the activities of the user to perform the additional appropriate activities to address the changes or in response to changes.

BRIEF DESCRIPTION OF DRAWINGS

Features of the present disclosure are illustrated by way of examples shown in the following figures. In the following figures, like numerals indicate like elements, in which:

Fig. 1 illustrates a network environment 100 having a cognitive system 102, according to an example embodiment of the present disclosure;
Fig. 2 illustrates a data assignment perspective view 200 of a knowledge processor, according to an example embodiment of the present disclosure;
Fig. 3 illustrates components of the cognitive system 102, according to an example embodiment of the present disclosure;
Fig. 4 illustrates a perspective view of a knowledge processor, according to an example of the present disclosure;
Fig. 5 illustrates components of the cognitive system 102, according to an example embodiment of the present disclosure; and
Fig. 6 illustrates a learning method 600 for providing the cognitive and context data to a knowledge processor, according to an example embodiment of the present disclosure;
Fig. 7 illustrates a method for executing Dynamic Algebraic Causal Subsequence (DACS) as sequencing learning, according to an example embodiment of the present disclosure;
Fig. 8 illustrates a method for executing DACS for the explicit knowledge and the tacit knowledge, according to an example embodiment of the present disclosure;
Fig. 9 illustrates a hardware platform for embodiment of the system, according to an example embodiment of the present disclosure;

Fig. 10 illustrates a method for determining an option as an outcome, according to an example embodiment of the present disclosure;

Fig. 11 illustrates a combined method for arranging information in determining sequence ordering rule, on conditional probability or likelihood of state, action, response and reward, according to an example embodiment of the present disclosure;

Fig. 12 illustrates a method for ranking information for a dynamic inference engine, according to an example embodiment of the present disclosure;

Fig. 13 illustrates a method for determining salient rank order information for a cognitive unaided choice engine, according to an example embodiment of the present disclosure;

Fig. 14 illustrates an example schedule for allocation and assignment of a user or a machine as a resource, according to an example embodiment of the present disclosure; and

Fig. 15 illustrates a list view of an unfiltered assignment data that may be ranked by a cognitive system and selected by a user, according to an example embodiment of the present disclosure.

DETAILED DESCRIPTION

For simplicity and illustrative purposes, the present disclosure is described by referring mainly to examples thereof. The examples of the present disclosure described herein may be used together in different combinations. In the following description, details are set forth in order to provide an understanding of the present disclosure. It will be readily apparent however, that the present disclosure may be practiced without limitation to all these details. Also, throughout the present disclosure, the terms "a" and "an" are intended to denote at least one of a particular element. As used herein, the term "includes" means includes but not limited to, the term "including" means including but not limited to. The term "based on" means based at least in part on.

The present disclosure describes a cognitive system for detecting user activities and changes in the user activities to perform related activities. According to an example of the present disclosure, a system may include a knowledge processor comprising a cognitive operating system, a data receiver, a scheduler, an activity monitor, a forecaster, a trade-off analyzer, and a prescriptive engine. In an example embodiment, the data receiver, the scheduler, the activity monitor, the forecaster, the trade-off analyzer, and the prescriptive engine may be in communication with each other to perform functionalities of the system.

The data receiver may receive, but is not limited to, data from an access device for an action. The action may be an automatic activity performed by the access device or a user initiated activity. For example, if a user receives an invitation for a meeting, the meeting may be automatically stored in a calendar application of the access device or may be stored by the user. The data may include transactional data associated with context of the action. The context may include date, time or purpose related to the action. The scheduler may capture cognitive and context data from the data, that is indicative of timestamp, context and objective associated with the action. Thereafter, the scheduler may perform an activity such as booking the meeting, searching for flight tickets, making hotel reservations for a user. The scheduler may also render activity data associated with the activity of the user, the activity data being indicative of details of the activity such as, flights details, hotel details and cab details. The activity monitor may detect a change in the activity or the action.

Thereafter, the forecaster may predict a plurality of options for a target activity that is to be performed in response to the change in the action or the activity. The plurality of options may include a state of a user, an action to be taken by the user, an expected response for the action taken, and a reward for the activity. The trade-off analyzer may perform analysis on the data and the activity data to determine utility for each option as an outcome. In an example, the options may be optimized in multi-layered-multi-dimensional as well as in DACS structure based on conditional dependency programming (CDP).

In an embodiment of the present disclosure, the prescriptive engine may identify an option from amongst the multiple options as a target activity to be performed in response to the change. The option may be the most appropriate option to be performed for the target activity. For instance, if the meeting time and day has changed then booking of the hotel may be changed. However, due to unavailability of rooms for the changed time and day, the room may be booked in another hotel.

The present disclosure provides an efficient technique of capturing cognitive and context data for activities performed by a user and provide useful suggestions to the user. The cognitive system may also detect change in user activities and adjust related activities accordingly. Therefore, the present disclosure provides an efficient, cognitive and intelligent to activity management for users thereby enhancing user satisfaction.

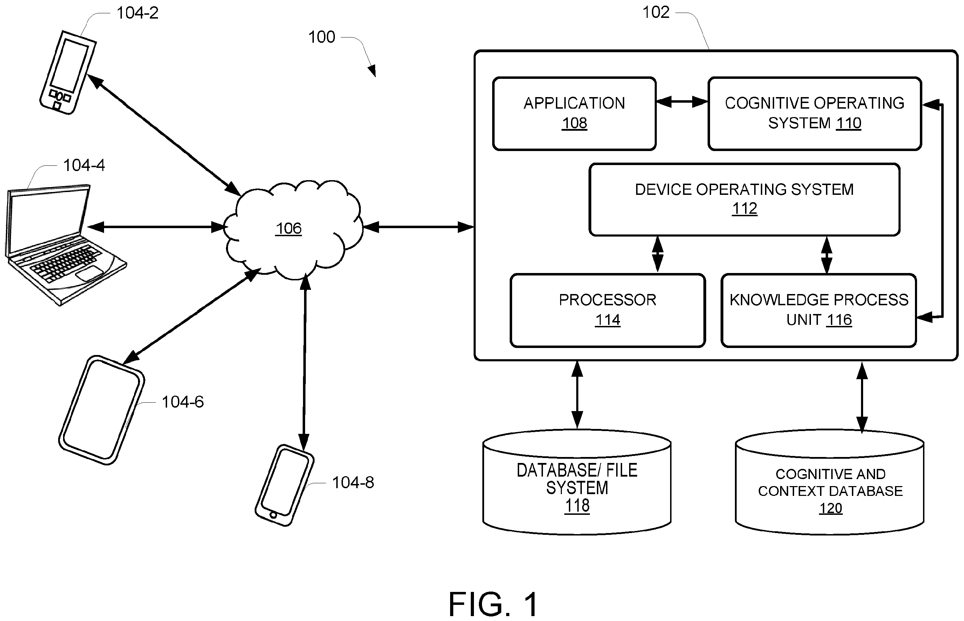

Figure 1 illustrates a network environment 100 implementing a cognitive system 102, according to an example embodiment of the present disclosure. The network environment 100 may either be a public distributed environment or may be a private closed network environment. The environment 100 may include the cognitive system 102 communicatively coupled to a plurality of access devices 104-2, 104-4, 104-6, and 104-8 that may be associated with a user, through a network 106. The access devices 104-2, 104-4, 104-6, and 104-8, have been commonly referred to as access devices 104, and have been referred to as an access device 104, hereinafter.

The cognitive system 102 may be a device to collect data such as typical data and cognitive and context data related to the activities performed by the user and dynamically perform additional activities for the user. The cognitive system 102 may be any computing device connected to the network 106. For example, the cognitive system 102 may be implemented as a personal computer, a desktop, a laptop, and a mobile device.

The cognitive system 102 may include an application 108 for allowing the user to perform various activities, a cognitive operating system 110, a device operating system 112, a processor 114 and a knowledge processor 116, the knowledge processor 116 comprising the cognitive operating system 110. The cognitive system 102 is also connected to different databases, such as database or file system 118 for storing typical data and structure of various activities performed by the user, and cognitive and context database 120 for storing cognitive and context data associated with the activities. The knowledge processor 116 and the access devices 104 may be associated with the user; the user may be a subscriber to one or more services, such as a wireless telephone service provided over the network 106.

Among other capabilities, the access device 104 may be a portable device that is capable of transmitting and receiving wireless signals from the cognitive system 102. Examples of the access device 104 includes, personal digital assistants, smart phones, hand held devices, mobile phones, laptops and the like. The access device 104 may also include a data reader, such as an automated teller machine, a radio-frequency communication device, such as a parking lot reader, a Near Field Communication (NFC) reader, such as a contactless payment device, an Internet enabled device, such as an airline kiosk, a large screen device, such as a shopping kiosk. Further, the access device 104 may be one of a data enabled sensors, such as a weather sensor, a network connection device, such as a router, a digital device, such as a medical scanner, a voice enabled device, such as a smart speaker, a digital content recording device, such as a camera, an audio recorder, a video camera, and a vehicular computing and communication device.

In an example, the access device 104 may be used for various activities by the user for measuring or determining metrics, such as location and time, traffic, environment conditions, weather conditions, vehicle capacity, door movements and buildings. The access device 104 may also detect images, motion, gestures, usage condition, video, and audio. The access device 104 may include applications for various activities such as shopping, commuting, traveling, booking hotels, servicing, banking transactions, detecting health, activating car or a device, accessing remote home security, trading investments, joining events, monitoring time. The access device 104 may also include applications to dynamically detect, use, play and display content such as video, audio, document, map, text, and graph.

The network 106 may be a wireless or a wired network, or a combination thereof. The network 106 can be a collection of user networks, interconnected with each other and functioning as a single large network (e.g., the internet or an intranet). Examples of such user networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 106 includes various network entities, such as transceivers, gateways, and routers; however, such details have been omitted for ease of understanding.

The embedded database or file system 118, for example, stores transactional data of the user that includes, but is not limited to, data related to an activity, referred to as activity data, historical data used for previous activity, geographic location associated with an activity, referred to as location data, timestamp and other meta data, content provided to another user and the group, referred to as interaction data.

The embedded cognitive and context database 120 stores cognitive information such as attributes, factors, features, preferences, proficiency, productivity, referred to as the cognitive and context data, information related to state including pre-activity, buy, experience, post-purchase, referred to as state data, information related to actions including motivation, impression, thinking, feeling, referred to as action data. Further, cognitive and context database 120 stores information related to response including attitude, behavior, belief cues, appeals, such as response data and context information such as intellect, identity, memory, intelligence, referred to as context data that may be used for determining the plurality of choices. The database 118 may include a database system or other type of storage system. The database 118 may include one or more data storage media, devices, or configurations and may employ any type, form, and combination of storage media. For example, the database 118 may include a hard drive, network drive, flash drive, magnetic disc, optical disc, random access memory ("RAM"), dynamic RAM ("DRAM"), artificial intelligence enabled memory, other non-volatile and volatile storage unit, or a combination thereof. In an example, data may be temporarily and permanently stored in the database 118.

In an embodiment, the environment 100 facilitates transmitting data from the cognitive system 102 to one or more access devices 104 and from the one or more access devices 104 to the cognitive system 102. The cognitive system 102 may collect data from the access devices 104 that may be used for activity, behavioral and preference information of users and perform computations to obtain a plurality of choices based on a current activity and a target activity of the user. The cognitive operating system 102 may transmit the plurality of choices to the access device 104 with which the knowledge processor 116 is connected such that the plurality of choices may be presented on the knowledge processor 116.

The knowledge processor 116, through the cognitive operating system 110 may use network technologies suitable for transmitting transactional data, such as activity, application data, content, and geographic location. In an example embodiment of the present disclosure, the data may be transmitted between different entities through data transmission protocols including, by way of nonlimiting example, Transmission Control Protocol ("TCP"), Internet Protocol ("IP"), File Transfer Protocol ("FTP"), Telnet, Hypertext Transfer Protocol ("HTTP"), Hypertext Transfer Protocol Secure ("HTTPS"), Session Initiation Protocol ("SIP"), Simple Object Access Protocol ("SOAP"), Extensible Mark-up Language ("XML") and variations thereof, Simple Mail Transfer Protocol ("SMTP"), Real-Time Transport Protocol ("RTP"), User Datagram Protocol ("UDP"), Global System for Mobile Communications ("GSM") technologies, Code Division Multiple Access ("CDMA") technologies, Time Division Multiple Access ("TDMA") technologies, Short Message Service ("SMS"), Multimedia Message Service ("MMS"), radio frequency ("RF") signaling technologies, signaling system seven ("SS7") technologies, Block-chain Protocol technologies, Bit-Torrent protocol technologies, Ethernet, in-band and out-of-band signaling technologies, and other suitable networks and protocol technologies.

In an example, the cognitive system 102 may have an input-output mode of communication. In an input mode, the cognitive system 102 may assign and allocate cognitive and context data in the knowledge processor 116. In an output mode, the cognitive system 102 may be connected to the access device 104 through the cognitive operating system 110 and the application 108. The knowledge processor 116 may use the application 108 to connect with the access device 104.

The data provided from the access devices 108 or the device operating system 112 may be tagged or carry numerous transactional data including biometric data and cognitive and context data to provide cognitive and contextual dimensions to user activity, the access device 104, or the device operating system 112. For example, individuals enter flight information, passport, an image, such as a camera photo, biometrics, such as hand-print, visa information, travel related information and custom questionnaire at the airport kiosk or access device. Such information may be provided to further determine context and cognitive features and attributes data through the cognitive operating system 110 and the knowledge processor 116 process the information to store transactional data in the data file system 118 and related context, features and attributes information in cognitive and context data 120.

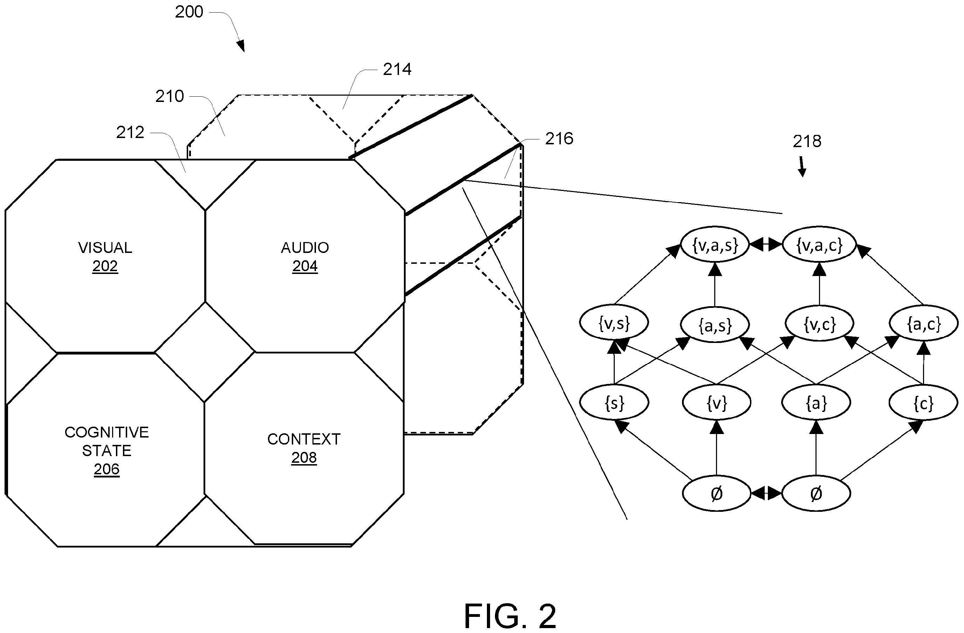

FIG. 2 illustrates a data assignment perspective view 200 of the knowledge processor 116, according to an example embodiment of the present disclosure. The data assignment perspective view 200 illustrates the way the data is arranged. For example, a camera photo (Image data) is not only related to feature and attributes of the image to determine cognitive state, but also related to visa and travel related information and in audio-to-text to derive context information. The data is arranged, thereby assigned, along with image and audio data for storage. The knowledge processor 116 may represent a hardware interface that runs the cognitive system 102 or other components such as distributed interfaces that perform the functions of the cognitive system 102 in a distributed computing environment.

The knowledge processor 116 includes a visual data panel 202, an audio data panel 204, and a cognitive state data panel 206 and a context data panel 208 which together forms a single unit of resource data assigned to a neural station. The neural station may be, for example, an integrated unit combining all types of data including image, audio, context and cognitive data. In an example, a station that stores explicit knowledge 212 is connected to another station that stores tacit knowledge 214 to form a plurality of neural pathways as neural network connectors 216. Each neural network connector 216 may be a plurality of input and output vectors 218. The output vectors 218 represent different combinations of the audio (a), video (v), cognitive state(s), and context (c) data. For instance, an output vector can include a combination of visual (v) and cognitive state (s) or a combination of audio (a) and a context (c). The output vector may also include one type of data, such as only audio (a) or only visual (v).

The neural network connectors 216 may interact with the device operating system 112 to receive data including, but not limited to, audio data, transmission data and audio-video codec required for analog, digital and transformation from analog to digital, Natural Language Processing (NLP) for speech-to-text-to-speech communications, machine-aided human translation processes (MAHT) to translate text or speech from one language to another. Further, the neural network connectors 216 interact with cognitive and context database 120 for selective assignment of resources to stations that parameterize operations. The neural connectors may obtain combined data including image, audio, context and cognitive data, for explicit knowledge 212 and tacit knowledge 214 to store in the cognitive and context database 120. The same may also be used to access selective data from the database, decipher the data that are recorded as the explicit knowledge 212 and data that are recorded as the tacit knowledge 214 for later analysis.

A neural network connector 218 may receive the values of the data a, v, s and c, for an activity and assign them in different resource 112 , then retrieve them and perform a Dynamic Algebraic Causal Subsequence (DACS) algorithm. The neural station, i.e., the combined data, as described above, as single unit of data - image, audio, context and cognitive data, -, may come all at the same time or may come separately, for instance, referring to the earlier example, say, first passport data, then visa information, then travel information, etc. not in that sequence. The combined data may come in in a particular sequence, in a random sequence and/or simultaneously . Since, the size or capacity required is unknown at the first event for the subsequent event, a 'default' (resource) is assigned, which is updated based on DACS as and when subsequent information are obtained. The DACS output is used to determine, how many resources are required for subsequent events. This is applicable not only for a single individual's combined data, but also to a group where an individual is a member as well as all individual's combined data, i.e., all neural stations. Therefore, DACS enables neural connectors 216 to forecast, optimize and assign resources to store the combined data.

In an example, the variables may be addressed by capacity and not by coverage. This form of assignment is represented by a function on the output of the resource 112. The capacity-based assignment may be a primitive operation and may be essential for some forms of generalization.

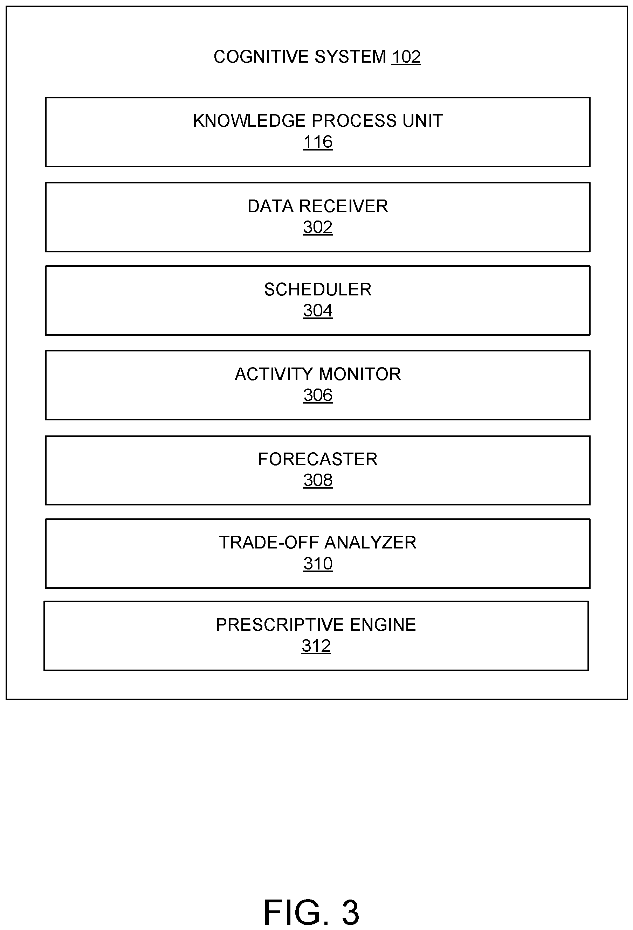

Fig. 3 illustrates components of the cognitive system 102, according to an example embodiment of the present disclosure. The cognitive system 102 may comprise the knowledge processor 116, a data receiver 302, a scheduler 304, an activity monitor 306, a forecaster 308, a trade-off analyzer 310, and a prescriptive engine 312. In an example, the data receiver 302, the scheduler 304, the activity monitor 304, the forecaster 306, the trade-off analyzer 308, and the prescriptive engine 310 may be in communication with each other to perform functionalities of the system.

The cognitive system 102 may also include other hardware components such as a processor, a memory and an interface. The processor, amongst other capabilities, may be configured to fetch and execute computer-readable instructions stored in the memory. The processor may be implemented as one or more microprocessors, microcomputers, Graphic Processing Units (GPU), Application Specific Integrated Circuits (ASICs), microcontrollers, digital signal processors, central processing units, state machines, logic circuitries, and any devices that manipulate signals based on operational instructions. The functions of the various elements shown in the figure, including any functional blocks labeled as "processor(s)", may be provided through the use of dedicated hardware as well as hardware capable of executing software in association with appropriate software.

The memory may store the cognitive and context databases 120 and database or file system 118. The memory may be coupled to the processor and may provide data and instructions for generating different requests. The memory can include any computer-readable medium known in the art including, for example, volatile memory, such as static random access memory (SRAM) and dynamic random access memory (DRAM), and non-volatile memory, such as read only memory (ROM), erasable programmable ROM, flash memories, hard disks, optical disks, and magnetic tapes.

The interface may include a variety of machine readable instructions-based interfaces and hardware interfaces that allow the cognitive system 102 to interact with different entities, such as the processor, and the components. Further, the interface may enable the components of the access device 104 to communicate with the cognitive system 102, and external repositories. The interface may facilitate multiple communications within a wide variety of networks and protocol types, including wireless networks, wireless Local Area Network (WLAN), RAN, satellite-based network, etc.

In operation, the data receiver 302 may receive data from the access device 104. The data may be related to an action that may be automatic action or performed by the user. The action may include any activity performed by the user for instance, the user receiving an invitation for a meeting and the meeting date and time being automatically stored in a calendar application of the access device. The date and time of the meeting may also be stored by the user in the calendar application. The data may include transactional data associated with context of the action.

After receiving the data from the access device 104, the scheduler 304 may capture cognitive and context data from the data. In an example, the cognitive and context data may include a timestamp, a location, a place, intent, features, attributes, and mode of event, attitudes, proficiency, belief cues, signals of values, behavioral attributes, ethnogenesis, preferences, productivity, and selections.. The cognitive and the context data may be used for determining the nature of activity, the purpose of performing the activity and other activities related to the activity. For instance, if the user books a hotel, then the cognitive and context data associated with the booking of the hotel may include the date and time of the booking. Further the cognitive and context data for hotel booking may also be used for booking a cab. In an example, the cognitive system 102 may also refer to historical data to determine usual time of the user for leaving a hotel for a meeting during the stay in the hotel and use this data to book the cab.

In an example, the scheduler 304 may perform an activity and related activities such as booking the meeting based on availability of the user, searching for flight tickets, making hotel reservations and cab bookings for the user upon receiving the data related to the meeting. The data associated with the related activities, for instance, flight details, price, cab charges, timings may then be displayed to the user. After performing the activity and the related activities, the activities may be monitored for any change. The activity monitor 306 may detect the change in the activities or the bookings. For instance, if there is a change in schedule of the meeting, then the activity monitor 306 may detect the change based on for instance, a new email or a notification of a meeting application or a calendar application.

The forecaster 308 may then predict a plurality of options for a target activity that is to be performed in response to the change in the action, the activity or any booking. The plurality of options may include a state of the user, an action to be taken by the user, an expected response for the action taken, and a reward for the activity. The state of the user, for example, may be a combination of factors including, but not limited to, intellect including education, occupation, and expertise; identity including ego, altruist, social, and dominant; memory including intent, habit, beliefs, and attitude; and intelligence including experiences, analytics, which are derived as one cognitive state, as "anxious" or "confidence". These factors may be derived and inferred from various individual and group data where the individual is a member. In an example, an individual may not be in more than one cognitive state at a given point in time.

For example, if the change detected is postponing of the meeting by two days, then the plurality of options may include, an option for rebooking the flight tickets with the same airlines, an option of cancelling the previous flight booking and making a new booking with a different airlines, price difference between the two, an option of shifting the hotel reservation in the same hotel, an option for new hotel booking, a price difference between the same hotel and the new hotel, and any discount offered by the same or the new hotel.

The trade-off analyzer 310 may perform analysis on the data and the activity data to determine utility and benefit for each option as an outcome. For instance, the trade-off analyzer 310 may assess that rebooking with the same airlines and booking with the new hotel has maximum utility based on the cost savings. The prescriptive engine 312 may identify an option from amongst the multiple options as a target activity to be performed in response to the change. The option may be the most appropriate option to be performed for the target activity.

Further, the cognitive system 102 may comprise a state identifier, an action indicator, a response provider, and a reward identifier. The state identifier may determine a state of the user based on at least one of the plurality of options, the optimized plurality of options, the target activity, and the resources. The action indicator may indicate a responsive action to be taken based on the state of the user, the plurality of options, the optimized plurality of options, the target activity, and the resources. The action indicator may also calculate a utility for each option based on a plurality of attributes, and the additional features associated with the responsive action and determine a utility probability based on utility of the user performing the action at a particular time, and optimizing factors. An action may involve a series of inter-dependent actions. While, the probability generator generates probability for each option as mutually exclusive event, such as a likelihood of arrival of an airline on time, the action indicator generates probabilities as mutually inclusive with conditional probabilities of previous event, such as the likelihood of local connection with the condition of likelihood of airline arrival on time.

In an example, the action indicator may also model the user as a data point based on a location, a nearest-neighbor, an optimal control, the plurality of options, and the resources. The action indicator may also associate the data point with the cognitive and context data and collect multiple data points for multiple users to form groups of the users. The optimal control may include actions of the user, for instance, for an airline booking for a meeting in London, the bookings of other participants in a group for the same meeting; the policies, as optimal control, like no more than two executives to travel in the same flight, and, therefore, options thereof. The action indicator may then determine a cognitive and context dataset including multiple options based on the plurality of options, the optimized plurality of options, the target activity, and the resources for a group of users of which the user is a member. In an example, the trade-off analyzer calculates the utility for each option, for instance, the airline ticket of a meeting, whereas, the action indicator calculates the utility from series of options for an action, for instance, from the airline, a local connection, a local transport, a local hotel for the meeting.

The response provider may provide a response based on the responsive action, the plurality of options, the optimized plurality of options, the target activity, and the resources. The reward identifier may identify a reward to be provided based on the responsive action, the plurality of options, the optimized plurality of options, the target activity, and the resources on activity of the user.

The details of working of the components and additional components have been described with reference to subsequent figures.

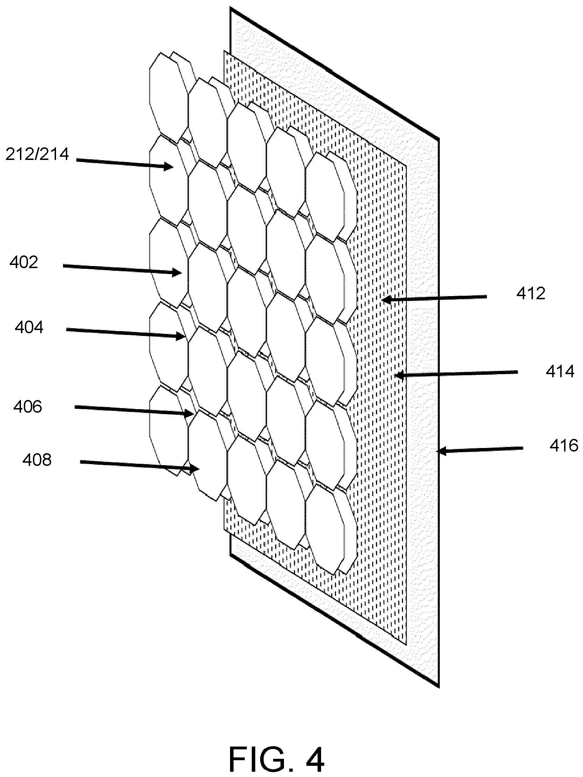

Fig. 4 illustrates a perspective view 400 of the knowledge processor 116, according to an example embodiment of the present disclosure. The perspective view 400 of the knowledge processor 116 may include the configuration as that of the knowledge processor 116 and not a storage unit. A processor generally has embedded data storage that processes the command line instructions related to explicit knowledge and tacit knowledge data that is stored in the cognitive and context database 120. Traditional computers have CPU and GPUs processes; however, the knowledge processor 116, as described in present example, may be a highly parallel structure that makes them more efficient than general-purpose CPUs or GPUs, for knowledge process techniques, which , process large blocks of data in parallel as described herein,. The knowledge processor 116 includes a plurality of data storage units 402. The data storage units 402 may be magnetic, optical and solid-state storage units. These storage units 402 may have interfaces 404 that are digital on the drive to process the analog signals from read/write heads. These drives present a consistent interface to the rest of the computer, independent of the data encoding scheme used internally, and independent of the physical number of storage units 402 and heads within the drive. These storage units 402 also includes connectors 406 that connects to a volatile or a non-volatile memory 304 over one of several bus types, including parallel ATA, Serial ATA, SCSI, Serial Attached SCSI (SAS), Fiber Channel, etc. that are fabricated thereon. In an example, the solid-state storage units 402, in pair with interfaces 404, use connectors 406 to connect to a plurality of volatile or non-volatile memory 304, a controller 408 that incorporates the electronics that bridge the memory components to the host computer; and a capacitor 412 or some form of battery, which are necessary to maintain data integrity. In addition, the knowledge processor 400 may include an optical security 412 that may include encryption such as digital holographic encryption in optical technique, which describes encryption using multidimensional digital holography, or compressive sensing encryption, or Nano or quantum-scale embodiment, or ghost imaging or any combination thereof with image processing algorithms.

In an embodiment, the knowledge processor 116 further includes blocks 414 that can be erased and written a limited number of times into a chain of activities as file system and optimized its block allocation to the geometry of the data storage units 402. Furthermore, the rear-panel 416 includes a form factor intended to be plugged directly into the motherboard and used as a computing processor.

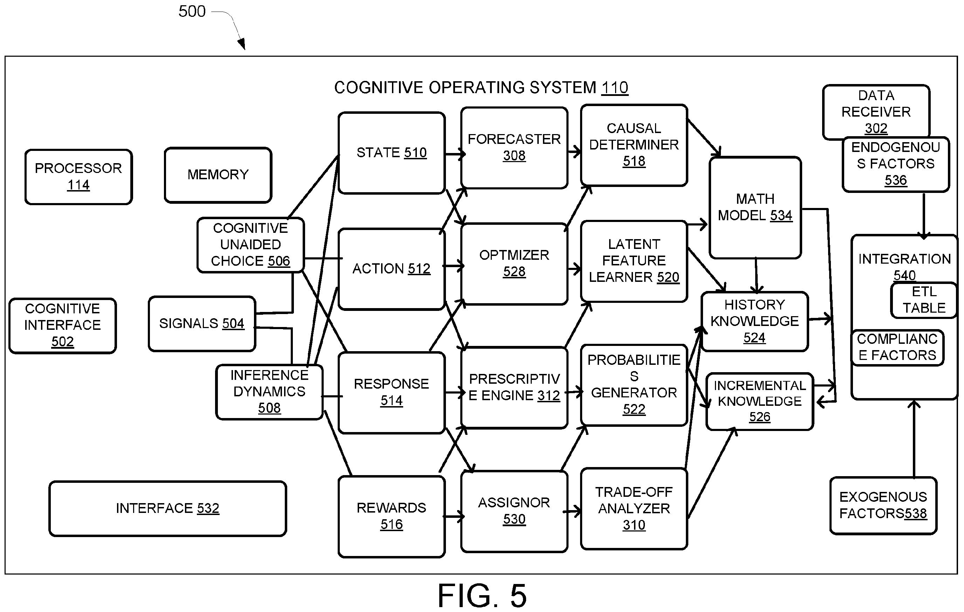

FIG. 5 illustrates the components of the cognitive operating system 110, according to an embodiment of the present disclosure. The cognitive operating system 110 may comprise hardware, input/output devices, storage and processors with applications to perform various functions. In an example, the knowledge processor 116 and the cognitive operating system 110 may administer machine readable instructions stored on a computer readable medium and are executable by the processor 114 or other processing circuitry to perform various functions.

In an example, the cognitive operating system 110 may be one of an operating system, as software to communicate between hardware and software, an application as one or more software to perform various functions, and a log data that stores and processes access to the cognitive operating system 110. Each of these components may be operatively coupled to a data integration bus with an Extract, Transform and Load (ETL) table, and compliance factors as a scheduler to pull and push information when required.

The cognitive operating system 110 may include a computer-readable medium for storing machine readable instructions to be executed by the processor(s) 114. For example, a computer readable medium may be non-transitory and non-volatile, such as a magnetic disk or volatile media such as Random Access Memory (RAM), or pinned memory. The instructions stored on the computer readable medium may include machine readable instructions executed by the processor(s) 114 to perform various methods and functions. The computer readable medium may include solid state memory for storing machine readable instructions and for storing data temporarily, which may include information from the data repository, for performing project performance analysis. The cognitive operating system 110 may be multi-user, multiprocessing, multitasking, multithreading, real-time and the like.

The cognitive operating system 110 may include a data receiver 302 to receive data pertaining to an action or current activity and a target activity of the user. The data receiver 302 may provide one of more functions including annotating, processing, editing, rating, labeling, activating, commenting, blocking, reporting, and categorizing content received. The data receiver 302 may also determine a current choice, a target choice and choice updates of an activity in real-time for the user.

In an example, the data may be received from at least one of the knowledge processor 116 and one or more databases, such as file system 118 and cognitive and context database 120. The data receiver 302 may also determine an activity of the user from the data received. For example, the data receiver 302 may determine the activity, such as booking a movie ticket, of the user at specific location of the access device 104 based on location tracking, such as Geographic Information System (GIS), or Global Positioning System ("GPS").

The location of the access device 104 may also be tracked based on trilateration of radio frequency signals received by the access device 104. The activity and geographic location data from access device 104 may be sent to the cognitive system 102 and stored in the cognitive and context database 120.

The data receiver 302 may determine the activity at the geographic location from the received data. Further, the data receiver 302 may provide data pertaining to activities, including content that has been created or received using a knowledge processor 116.

The data receiver 302 may also provide location-specific activity content, which may include initiating the knowledge processor 116 to access and provide information representative of the content and associated data, for instance, activity data and other tagged data to the cognitive operating system 110. The provided data may include the activity content, the associated geographic location data, and any other data used for prediction, prescription and optimization of a choice of unaided choice set for the user. In an example, the unaided choice set may be provided to the cognitive operating system 110. The data receiver 302 may prompt the user for approval or confirmation before data is provided to the cognitive operating system 110 or the access device 104 and may automatically provide the data to the cognitive operating system 110 once activity content, location data, transactional data and other data are established with the content.

The data receiver 302 may also be configured to store content received from the knowledge processor 116 and the access device 104 and selectively distribute to the cognitive operating system 110. For example, when the user uses cognitive system 102 or the access device 104 at a geographic location associated with a particular content, i.e., a predefined geographic proximity of the activity, the cognitive operating system 110 may make the content accessible to the user within the predefined geographic proximity between the origin and target locations and within specified locations between the origin and target locations. The cognitive operating system 110 may send a notification that the content is accessible to the knowledge processor 116 and the access device 104 within a predefined geographic proximity, and the user may utilize the access device 104 to request and receive the content from the cognitive operating system 110. For example, at an airport, the cognitive operating system 110 may be associated with the check-in kiosk where an individual enters all the combined travel data for check-in, the cognitive operating system 110 may identify the kiosk location, within an airport or in the city, derives how many people are in the queue for baggage drop-off, security and immigration, forecasts the likely time for the gate closing, and optimizes the allocated resources. The result of analysis is made available to a) individuals so that they can plan their time, b) airport managers so that they can deploy additional resources at various workstations, such as manpower and machines if needed, to better manage traffic inside the airport.

In an example, the user using the access device 104 with the knowledge processor 116 may create and receive activity content based on current activity at a geographic location, target geographic location, and a cognitive state, such as a pre-purchase experience, a post-purchase experience, and cognitive and context data, such as intellect, identity, memory, and intelligence of the user. In an example, this data may be derived from various features, attributes, behaviors, social experiences and preferences data. The cognitive state may also include the user's stationary state or dynamic state updates from a current activity content location to the target activity content location. An activity content or activity data may be associated with content of an origin location, content associated with a dynamic activity, content associated with a target location and content from the access device 104 of the user. The activity content may be based on cognitive user-experience ("UX") 502, processed by signals module 504 for a change in the activity. The activity content may be distributed through multicast or unicast techniques. The availability of activity content may be selectively notified to the knowledge processor 116 and the access devices 104 based on the locations, cognitive state and context verified with user's identity. Accordingly, the user may be able to use knowledge processor 116 to share content with another user through another knowledge processor 116.

The data receiver 302 may provide the activity content, the cognitive and context data, and geographic locations to the user with one or more tools for annotating the content and communicating with other users. For example, the user authenticated to protected content and publish the content may annotate the content by editing the content, prioritizing the content, rating the content, or publishing a comment about the content to the cognitive operating system 110.

Examples of annotations may be service updates, such as change in product specification, accident information. The other user may access the annotation and respond to the user who provided the annotation. The annotations may be updated and distributed in real-time. The communications between the users may be processed as a communication-thread to which the users involved may be granted access. For example, the user may share knowledge that prefer ABC airline baggage counter, with the cognitive operating system 110. The other user may use the knowledge processor 116 and the access device 104 to gain access to the published content associated with the geographic location, such as, the assignment schedule for the ticket-counter and content threads.

The knowledge processor 116 may detect the access device 104 for the activity content at a geographic location where the content may be created, arranged with the geographic location, and present the content with location through the cognitive interface 502 and signals 504, and may be according to the cognitive unaided choice 506 or according to inference dynamics 508, to the knowledge processor 116 as explicit knowledge.

In an example, during a business travel, the user may access hotel booking details, travel time between airport and hotel and a meeting location, nearby restaurants, local transportations, as activity content to the cognitive operating system 110 and frequently use them as explicit knowledge. For instance, the user may access and group published content based on different geographic location associated with the explicit knowledge corresponding with the travel pattern and habits. The published explicit knowledge may be presented as a service queue or priority to the user. The user, in another instance, may travel to a particular geographic location to gain access to published explicit knowledge associated with the business travel at a geographic location. The user may be able to utilize the published explicit knowledge to plan and improve the user's activities at the geographic location. The published explicit knowledge, for example, may include suggestions as to recommended places to eat, places stay or people to visit. Such publishing may be provided by other users on the same or similar activity and experiences.

In another example, the activity content may be used as a skill, feature, proficiency, productivity, and preferences. Such information may be provided through practice in a particular context and transmitted to the knowledge processor 116 as tacit knowledge. An organization, for instance, may use collective cognitive and context data to provide the activity content on the activity for assignment and allocation purposes, including information about skills or features, experience, usage patterns and conditions, availability, risk exposures, reliability, etc. A continuous and frequent use of such activity, in another instance, for example, riding a bike, playing piano, speaking in different languages, may post content including highlights, schedules, and maps as part of the tacit knowledge. An organization, in another instance, may access such collective cognitive and context data to derive the tacit knowledge for assignment, allocation and schedule resources.

The cognitive operating system 110 may include a forecaster 308 that derives a target state 510, an action 512, a response 514 and rewards 516 of the user. The state 510 may determine the state, for example, in the journey-cycle or buying cycle, if the user in pre-purchase, buy, experience, post-purchase. The state 510 may use data from data receiver 302 along with the forecaster 308, and other components, such as optimizer 528, prescriptive engine 312 and assignor 530 and data generated by the causality determiner 518, the latent feature learner 520, the probabilities generator 522, and the trade-off analyzer 310 and may send and receive information to inference dynamics engine 508 as well as to the knowledge processor 116 and the access device 104 to determine the state. The state may be one of a physical state, a biological state, a financial state, a cognitive state, a behavioral state, and an emotional state. The inference dynamics relate to changing conditions in the sequence of events and inferences thereof. For example, the number check-in counters, baggage counters, ticket counters, security counters, immigration counters, gate counters, as resources including manpower and machines are assigned based on a) number of individuals or travelers or users arriving at a particular time, b) number of resources available at that point in time.

The state 510 may provide information, using the plurality of choices in the knowledge processor 116, to a supervisor to assign additional resource as the queue time becomes longer. The observed information received from the knowledge processor 116 and the access devices 104 are stored in the cognitive and context database 120 as explicit knowledge, until the state changes, at which time the state information are stored as tacit knowledge.

The action 512 may determine an action or a series of actions of the user performing an activity that is identified by the cognitive operating system 110. The action 512 may use data from the data receiver 302 and the state 510 along with the forecaster 308, the optimizer 528, the prescriptive engine 512 and the assignor 530 and determine the action or the series of actions. For example, the cognitive operating system 110 may determine whether patient traffic at a hospital is high for a doctor and the hospital may perform an action or a series of actions, such as schedule proficient nurses to handle more than one critical patients before assigning and allocating doctors. The action 512 may provide information, to the doctor to visit and check patients that may impact scheduling the next activity, for example, operation theatre. The observed information received from the knowledge processor 116 and the access devices 104 may be stored in the cognitive and context database 120 as explicit knowledge, until the state changes, at which time the state information are stored as the tacit knowledge.

The response 514 may determine an expected response or a series of expected responses for the user performing the activity that is identified by the cognitive operating system 110. The response 514 may use data from the data receiver 302, the state 510 and the action 512 along with the forecaster 308, the optimizer 528, the prescriptive engine 312 and the assignor 530.

In an example, the cognitive operating system 110 may determine that an increasing number of guests in a restaurant has caused long queue and that the user, the cook, may perform an expected response or a series of responses, such as preparing selective recipes only before prescribing the next order actions that may start on time. The response 514 may provide information, to the cook to assign a staff to prepare ingredients that may accelerate the next activity. The observed information received from the knowledge processor 116 and the access devices 104 may be stored as the cognitive and context data as the explicit knowledge, and the tacit knowledge upon a state change.

The rewards 516 may determine a reward or a series of rewards for the user performing the activity that is identified by the cognitive operating system 110. The rewards 516 may use data from the data receiver 302, the state 510 and the action 512 along with the forecaster 308, the optimizer 528, the prescriptive engine 312 and the assignor 530. The rewards 516 may send and receive information to the knowledge processor 116 and the access device 104 for determining the reward or the series of rewards, for instance, greater revenue for an additional transport service operation.

The cognitive operating system 110 may determine an increased number of commuters and therefore require additional floating transportations to mobilize commuters, the transportation operator may perform an expected value-benefit, such as assign and allocate resources likely increase in profit by 30% before prescribing the next order of actions that may start on time. The rewards 516 may provide information to a central manager to change the operating line that may impact selecting the next activity. The observed information received from the knowledge processor 116 and the access devices 104 may be stored as the cognitive and context data as the explicit knowledge or the tacit knowledge.

The forecaster 308 may use a causal determiner 518, a latent feature learner 520, a probability generator 522 and the trade-off analyzer 310 to formulate and derive forecasts. The forecaster 308 may determine current and next activity for the user. The forecaster 308 may also use historical knowledge 524 and incremental knowledge 526 to determine signal and derive forecast for the user. Further, the forecaster 308 may make additional predictions about the user's future activity, for example, if the user is in the airline baggage counter and the user has a set of choices for being assigned to a gate counter.

For forecasting multiple options for the user, the forecaster 308 may utilize stochastic methods including, but not limited to, Naive forecasts, Time series, Pattern Recognition, Support Vector Machine (SVM), Markov Decision Process (MDP), Bayesian Network (BN), Expectation Maximization (EM), Econometric Forecast Model (EFM), parametric and non-parametric (PNP), Partial Differential Equations (PDE), Bayesian Belief Network (BBN) and other probabilistic forecasting methods to forecast current activity or target activity or other predictions for the multiple options for the activity of the user. The forecaster 308 may also employ seasonality, cyclical behaviors and other conditional parameters to forecast any event or conditions for assignment and allocation in the knowledge processor 116.

The cognitive operating system 110 may include the optimizer 528 or library for determining optimal controls in terms of upper threshold and lower threshold for the state 510, the action 512, the response 514 and the rewards 516 of the activity. The optimizer 528 may determine the optimal assignment and allocation of resources for the user. The optimizer 528 may use historical knowledge 524 and incremental knowledge 526 to determine a signal and optimally assign, allocate and schedule the user's current activity as well as immediate future activity. In addition, the optimizer 528 may determine computational resources, such as file, memory, for assignment and allocation in the knowledge processor 116 to record the cognitive and context data. Further, the optimizer 528 may make additional optimization and optimal controls about the user's future and related activities. For example, when the information is sent to an airport manager to allocate and assign resources, such manpower and machines, at various workstations, to manage individuals' arrival into the system, the airport manager, based on the system, may assign the user to the airline baggage counter for a predetermined number of hours, say six hours. Thereafter, the airport manager may move the resource to the gate counter for remaining number of hours of his shift.

For optimizing, the optimizer 528 may use various optimization methods for making the optimal conditions. For instance, linear programming (LP), Integer Programming, Mixed-Integer Programming (MIP), Quadratic Programming, Mixed-Integer Non-Linear Programming (MINLP), Heuristics and Metaheuristics, Particle Swarm Optimization (PSO), Ant Colony Optimization (ACO), Stochastic Tunneling (STUN), Black-box optimization (BBO), Calculus of Variance, Dynamic Programming, Combinatorial Optimization methods, Partial Differential Equation, Simulated Annealing, Cellular Automata and various dynamic programming methods including Backward Induction, Longest Common Subsequence, Chain-Matrix Multiplication, etc. to optimize assignment, allocation and schedule current activity or target activity or other optimization for a plurality of choices for the activity for the user.

The optimizer 528 may use a function or a logic for optimization based on current activity content, such as a skill or a feature, proficiency, a cost function, a preference data and the cognitive and context data, various constraint methods such as Constraint Satisfaction, Constraint Propagation, Constraint Logic Programming Non-Polynomial Time Complete Constraints etc., various deterministic and stochastic optimization methods including but not limited to iterative methods such as Sequential Quadratic Programming, Gradient Descent, Quasi-Newton Method, Ellipsoid method, multi-objective optimization methods, multi-modal optimization methods, and minimization of cost/loss error methods to optimize and optimal control criteria ("OCC") to derive control policies to be accurate and communicate through the data receiver 302 for the current activity or the target activity or other assignment, allocation and scheduling for the plurality of choices for the user and a group, of which the user is a member. In an example, the optimizer 528 may optimize options in a multi-layered-multi-dimensional structure and in DACS structure based on Conditional Dependency Programming (CDP).

The prescriptive engine 312 receives the multiple options and determines options for the state 510, the action 512, the response 514 and the rewards 516 for the activity of the user. In an example, the prescriptive engine 312 may determine the choice-sets of the user based on historical knowledge 524 and incremental knowledge 526 to determine choice-sets and options for the user's current activity as well as immediate future activity. Further, the prescriptive engine 312 may make additional choice-sets and options about the user's future activity, for example, the user is in the airline baggage counter for a period of six hours and has the option to choose back-office operation and to be assigned at the security for two hours.

The prescriptive engine 312 may use various choice models, including but not limited to Discrete Choice, Conjoint Model, Dirichlet Multinomial, Revealed Preference, Utility Functions, etc., and option methods including but not limited to Real-Option valuation method, Risk-Neutral Option, Stochastic Calculus, Decision Tree, Monte Carlo, Finite Difference, Risk Reversal, Option Arbitrage methods, Statistical Arbitrage methods, Sequencing options to derive choice-sets on current activity or target activity or other options for a plurality of choices for the activity for the user.

The prescriptive engine 312 may use a function or logic for choice-set based on the current activity content and cognitive and context data, various choice models such as revealed preferences, econometric, sociometric, psychometric, ethnogenetic higher order factorial design. The prescriptive engine 312 may utilize various stochastic option strategy methods including but not limited to straddle, collar, fence, iron butterfly, iron candor, calendar spread, spread combinations, etc. to derive choice-sets and options to evaluate through the data receiver 302 for the current activity or the target activity or other assignment, allocation and scheduling for the plurality of choices of for the user and the group.

The assignor 530 that may perform a task, incurring some cost that may vary depending on the activity assignment for the user. The assignor 530 may perform all tasks by assigning at least one resource or one user to each activity and exactly one activity to each resource or the user in a manner that total cost of assignment is minimized for the state 510, the action 512, the response 514 and the rewards 516 for the user activity. The assignor 530 may determine the time-bounded assignment of the user. For example, the cognitive operating system 110 may determine that the current activity at the current location of the user based on the knowledge processor 116, the access device 104, data sources 118 and cognitive and context database 120 and other data received from the data sources. The assignor 530 may make additional assignments and schedules about the user's future activity; for example, the user is in the airline baggage counter for a period of six hours and has chosen back-office operation which may be at a distance specified. For each pair of facilities a weight or traffic flow is specified and the user has also been assigned at the gate counter for two hours, thus by minimizing the maximum of the distances multiplied by the corresponding flows.

Further, the assignor 530 may include various assignment methods and scheduling methods for allocating resources. The assignor 530 may use various assignment models, including but not limited to Greedy algorithm, Auction algorithm, Quadratic Assignment method, Linear Bottleneck Assignment, Monge-Kantorovich formulations, Hungarian method, etc., and scheduling methods including but not limited to Gittins index, Multi-Armed Bandit algorithm, Stackelberg Duopoly, Cycle-Time Analyses, Dynamic Allocation Index, Target Assignment to derive assignment on current activity or target activity or other schedules for a plurality of choices for the activity for the user.

The assignor 530 may use a function or logic for assignment based on current activity content, such as skill or feature, factors, operational data) and cognitive and context data, various assignment models such as in polynomial time using a reduction to the maximum flow problem, genetic algorithm, auction algorithms, inventory-cycle methods, through-put methods, directed acyclic graph, disjunctive graph etc. and various scheduling strategy methods including but not limited to job-shop scheduling, traveling salesman problem, flow-shop scheduling, nurse scheduling problem, etc., to derive assignments and schedules through the data receiver 558 for the current activity or the target activity or assignment, allocation and scheduling for the plurality of choices of for the user and the group.

The causal determiner 518 may determine causal factors for the multiple options for the user and the state 510, the action 512, the response 514 and the rewards 518 of the user activity. The causality determiner 518 may use signals 504 to determine causal factors variables for the activity of the user. For example, the cognitive operating system 110 may determine that the current activity at the current location of the user based on the knowledge processor 116, the access device 104, the data sources 118 and the cognitive and context database 120 and other data received from the data sources. The causal determiner 518 may also use historical knowledge 524 and incremental knowledge 526 to determine causal factors for the user's current activity and immediate future activity. In addition, the causal determiner 518 may derive causal factors for the computational resource, such as, file, memory. Further, the causal determiner 518 may determine additional causal variables about the user's future activity, for example, the user is required to be in the airline baggage counter for a period of six hours due to continuous queue weight or traffic flow and the user has also been assigned at the gate counter for two hours, which otherwise may cause delay in flight.

The causal determiner 518 may use various methods, including but not limited to logistic regression, factor analysis, Principal Component Analysis ("PCA"), multi-variate analyses, cross correlation, Lorentzian manifold to determine causal structure from non-totally vicious, chronological relation, causal relation, distinguishing, strongly causal, stable causal, causally continuous, globally hyperbolicity on current activity or target activity or other schedules for a plurality of choices for the activity for the user.

The latent feature learner 520 learns features and latent variables for the activity of the user. The latent feature learner 520 is required to learn the features and latent variables for the state 510, the action 512, the response 514 and the rewards 518 of the activity. The latent feature learner 520 may use signals 504 and causal variables to learn latent features and hidden variables for activity of the user. For instance, longer waiting time at the check-in counter may be due to inadequate number of kiosks (causal variable). Further, the hidden variables may be, for example, when individuals take longer time to provide information, inadequate camera photo feature quality, travel profile being inaccessible, or change in seat preference.

For example, the cognitive operating system 110 may determine that the current activity at the current location of the user based on the knowledge processor 116, the access device 104, the data sources 118 and cognitive and context database 120 and other data received. The latent feature learner 520 may use historical knowledge 524 and incremental knowledge 526 to learn latent features for the user's current activity as well as immediate future activity. In addition, the latent feature learner 520 may learn latent variables for the computational resource, e.g., file, and memory in the knowledge processor 116 to record the cognitive and context data. Further, the latent feature learner 520 may learn additional hidden variables about the user's future activity, for example, the user is required to be in the airline baggage counter for a period of six hours may require to count total baggage weight for fuel and overall aircraft load and the user has also been assigned at the gate counter for two hours to drive travelers be on time.

The latent feature learner 520 may use various methods, including but not limited to Markov Chain Monte Carlo (MCMC), Hidden Markov Model (HMM), Hidden Bernoulli Model, Latent Dirichlet Allocation (LDA), Bayesian Inference, Deep Belief Network (DBN), Artificial Neural Network (ANN) Kernel Principal Component Analysis (KPCA), Redial Basis Function (RBF), Singular Value Decomposition (SVD) Fourier analysis etc. on current activity or target activity or other schedules for a plurality of choices for the activity for the user.

The latent feature learner 520 to determine the cognitive state for the activity performed for individuals, may use a multi-layered-multi-dimensional latent feature learning model to accumulate the deep or hidden factors including, but not limited to, attributes, characteristics, attitudes, behavior, preferences, traits, etc. that drive the cognitive state of an individual. This illustrates a general framework for an activity-based cognitive state and relational latent features thereof in each cognitive state. A sub-process may determine the cognitive state for each factor with a set of variables. The method applied that train one support vector machine (SVM) per individual factor basket ($\beta...B$) and to compute the individual partworths generated from Gaussian distribution by regularizing with the aggregated partworths. A correlation from the variable set (j ...J) with feature variables are shown as $X$ and a choice for one over another is expressed as (1.... $i$) of $X$, that was associated to an individual is determined and the maximum likelihood probability for that factor may be used to determine the expected latent feature in that particular layer for the cognitive state.

These latent features, as described above, may also include a rating or a ranking of preference. A relational graph $c \in c$ is a construct of a graph of all the latent features related to activities at various locations on a journey of one or more individuals. Each graph G is associated with a potential function $\phi_c(v_c)$ that maps a tuple (values of features or aggregations). Together they provide a) multi-layered-multi-dimensional structure and overlap between two-layers, b) cognitive state of an activity; and c) cognitive state of consecutive activities. Consider a multiplex (neural network) formed by N labeled nodes $i$ = 1, 2 ..., N and M layers. To this end, indicated by G =(G$^1$, G$^2$, ..., G$^M$) the set of all the networks G$^\alpha$ at layer $\alpha$ = 1, 2, ... , M forming the multiplex. Moreover, for a multiplex, the layers are defined with multi-links and multi-degrees in the following way: Let us consider the vector ~m = (m$_1$, m$_2$, ..., m$_\alpha$, ..., m$_M$) in which every element m$_\alpha$ can take only two values m$_\alpha$ = 0,1. A multi-link ~m may be defined as the set of links connecting a given pair of nodes in the different layers of the multiplex and connecting them in the base layer $\alpha$ only if m$_\alpha$ = 1. Such overlaps are expected to be the global or the local overlap between two layers to characterize important correlations between the two layers in real-world situations.

The latent feature learner 520 may use a function or a logic for causality based on current activity content including features, factors, attributes, preference data and cognitive and the context data, the causal variables, various latent feature learning methods such as logistic regression, factor analysis, principal component analysis, HMM, MCMC, DBN, LDA, RBF, ANN, to learn features through the data receiver 558 for the current activity or the target activity or assignment, allocation and scheduling for the multiple options for the user and the group.

For example, in a transportation multiplex, where the different layers can represent different kind of features such as availability, Origin-Destination time, baggage restrictions, etc. connections or private commuting, the links are expected to be in the different layers of this multiplex with an overlap which is statistically significant respect to a null hypothesis of uncorrelation between the different layers. A driver $e_i$ is assigned to each node, determined by its fitness $n_i$. A link between two features i and j with drivers $e_i$ and $e_j$ (e.g., fitnesses $n_i$ and $n_j$) corresponds to two non-interacting features on the driver levels $e_i$ and $e_j$. The statistical mechanics methods are applied in the multi-links, where the driver with the largest fitness emerges as a clear winner, a finite fraction of feature landing on this driver level. Thus statistical mechanics method may predict a real winner-takes-all phenomenon, in which the fittest driver is not only the largest but, despite the continuous emergence of new drivers that compete for links in multi-links, it also always acquires a finite fraction of links and derives a cognitive state. The driver (fitness) distribution follows:

$$g(\epsilon) = C\epsilon^\theta$$

For this class of distributions the condition for a cognitive state, as expressed by the following equation, is

$$\frac{\theta+1}{(\beta\epsilon_{max})^{\theta+1}} \int_{\beta\epsilon_{min}(t)}^{\beta\epsilon_{max}} dx \frac{x^\theta}{e^x - 1} < 1$$

Since each individual is modeled as a quantum candidate. For example, each individual's cognitive state may be modeled as a function of one or more of latent feature factors and constraints. For example, a single individual's cognitive state is determined and then Z is defined:

$$Z = \sum \left(1 + \exp\left(N_\mu - N_\epsilon\right)/\tau = 1/\left(1 - \exp\left(\mu - \epsilon\right)/\tau\right)\right)$$

where Z is the probability statistical distribution of finding the individual in any particular cognitive state associated with an activity U, individuals N and factor-density V in the graph C. Z is proportional to the degeneracy of the accumulated cognitive states (of R as in Relational activity model). The grand sum is the sum of the exponential, which may be determined by expanding the exponential in Taylor series, over all possible combinations of U, V and N. Any one single individual's cognitive state may have two possible cognitive states - one having for the activity and other having for consecutive activities.

The aggregation method, for example, sheafing may be used for the aggregation into groups. Sheafing may be used for systematically tracking each individual's data attached (or glued) to open sets of a topological space. A group of individual cognitive sets, which may be represented by $\{X_i\}_{i \in I}$, is disjoint if $X_i \cap X_j = \phi$ whenever i ≠ j. The union of a disjoint family may be expressed as $\coprod_{i \in I} X_i$. Given a disjoint family of cognitive states, $\{X_i\}_{i \in I}$ there is an isomorphism, where each arrow (aggregated for multiple groups) has a specified domain and co-domain group in partially ordered cognitive sets P which may be expressed as follows:

$$p\left(\coprod_{i\in I} X_i\right) \xrightarrow{\ \cong\ } \prod_{i\in I} p(X_i) :: S \mapsto \left(S \cap X_i\right)_{i\in I}.$$

The causal determiner 518 may determine a causality of the user for station assignment. The station assignment may be for example, the airport manager assigning a resource including manpower and machine to a workstation, such as a check-in counter, a baggage counter, ticket sales, and security. The latent feature learner 520 may initiate self-organized cognitive algebraic neural network structure (SCANN), a multi-layered multi-dimensional structure, and dynamic algebraic causal subsequence (DACS) to arrange information to confirm, detect anomalies and rank order signal content of the current activity, for the multiple options, for e.g. by increasing traffic to assign additional resources to the knowledge processor 116 and the access device 104 for the user. For example, based on a number of individuals arriving at a particular time for various airlines flights departure and arrival, the number of resources, manpower and machines are assigned to various workstations. The individuals' cognitive as well as transactional information may enable knowledge processor 116 to trigger various information in order to forecast how much time the individual may take at various stations within the airport, optimize the resource allocation so that the individuals are served within a limited window of time, prescribe set of actions to both individuals and resources for better experience with least cognitive dissonance, and to assign resources by rotation, adding new resource, releasing resources, so that the resources are optimally distributed. The cognitive operating system 110 enabled with knowledge processor 116 learns various causal factors as well as latent feature variables to determine probabilities for forecasts and trade-offs for optimization and derive choice-sets for actions and station assignments of resources.

The user and the group where user is a member confirm and that corroborates with the previous actions then the cognitive operating system 110 learns to recognize traffic pattern and decisions thereof. The latent feature learner 520 may autonomously formulate latent causal variables including attributes, features, traits, preferences, behaviors and other cognitive and context data, apply previous as well as new learning to confirm, rank order thereof on the data receiver 302 of the current activity or the target activity or other transactional data for the multiple options of the user and the group, and send the multiple options to the access device 108. The latent feature learner 520, in one example, with pre-set numerous latent factors, may perform causal analyses, Hidden Markov Model (HMM) and DBN, based on pre-defined rules and, thereby map various transactional, activity, social, sensor and other data so that over time the system autonomously formulate and select latent causal variables including attributes, features, traits, preferences, behaviors and other cognitive and context data.

The probabilities generator 522 may generate prior and posterior probabilities for the activity of the user. The prior probability may be a probability distribution that represents uncertainty over an event before sampling and estimation of data. For example, one may estimate, based on a thumb rule or a heuristics that 75% travelers are most likely to come to airport before 90 minutes as stipulated. The posterior probability is a probability distribution representing uncertainty over an event after sampling of data. It is a conditional distribution as it conditions on the observed data. For example, after seeing the sample data one may estimate 60% travelers most likely to come to airport before 90 minutes as stipulated. Since data changes by time, the posterior probabilities get updated as the data changes. The probabilities generator 522 may use signals 504, the causal variables 516 and latent features and hidden variables to generate the prior and posterior probabilities. The probabilities generator 522 may also compute the probability distribution for the activity. For example, the cognitive operating system 110 may determine that the current activity at the current location of the user based on the knowledge processor 116, the access device 104, the data sources 118 and the cognitive and context data and the other data received from the data sources. The probabilities generator 522 may use historical knowledge 524 and the incremental knowledge 526 to generate prior, posterior, cumulative probabilities and probability density for the user's current activity as well as immediate future activity. In addition, the probabilities generator 522 to generate probabilities for the computational resource, e.g., file, memory, etc., in knowledge processor 116 to record the cognitive and context data. Further, the probabilities generator 522 may generate additional conditional probabilities about the user's future activity, for example, the user is required to be in the airline baggage counter for a period of six hours may require to derive probability distribution for baggage weight for fuel and aircraft load and the user has been assigned at the gate counter for two hours with likelihood of travelers be on time.

The probabilities generator 522 may include various probabilities and maximum likelihood estimation methods for making the predictions. The probabilities generator 522 may use various probability distribution methods including, but not limited to, Bernoulli distribution, binomial distribution, hyper-geometric distribution, Gibbs distribution, Poisson distribution, logarithmic distribution, normal distribution, log-normal distribution, Yule-Simon distribution, Beta distribution, fractal distribution, chi-squared distribution, F-distribution, Gamma distribution, exponential distribution, Power-law distribution, Weibull distribution Laplace distribution Dirichlet distribution, multi-variate distribution, t-distribution multinomial distribution and statistical physics ("STP") methods such as Mean-field, Ising spin-glass, replica theory, saddle point, entropy, ensemble, microcellular automata and drift diffusion to generate likelihood or probability on current activity or target activity or other predictions for a plurality of choices for the activity for the user.

The probabilities generator 522 may use a function or logic for generating probabilities distribution and density based on current activity content or the activity data and cognitive and context data, the causality variables, the latent feature learning various probability distribution methods and Maximum Likelihood Estimation ("MLE") methods such as discrete distribution, continuous distribution, mean-squared error to the data receiver 302 for the current activity or the target activity or other predictions for the plurality of choices.

The trade-off analyzer 310 may determine greatest or least amount of choice that may be attained for each of various given options. The trade-off analyzer 310 is required to determine how the user value having different attributes, such as features, functions, and benefits that make up the state 510, the action 512, the response 514 and the rewards 516 of the user activity. The trade-off analyzer 310 may use the signals 504, the causal variables and the latent features and the hidden variables to analyze combination of a limited number of attributes that is most influential on choice or decision making for activity of the user. The trade-off analyzer 310 may create additional implicit valuations about the user's future activity, for example, the user is required to be in the airline baggage counter for a period of six hours may find better utility for ticket counter and the user would be better off at the gate counter for two hours to streamline boarding process.

In an example, the trade-off analyzer 310 may include various multi-feature composition estimation methods for determining a trade-off utility score. The trade-off analyzer 310 may use various estimation methods including, but not limited to, discrete choice modeling, or stated preference research and, as part of a broader set of trade-off analysis, Analysis of Variance (ANOVA), Multivariate Analysis of Variance (MANOVA), systematic analysis of decisions and mathematical approaches such as evolutionary algorithms, orthogonal array, rule-based experimentation, etc. on current activity or target activity or other trade-offs for a plurality of choices for the activity for the user. Examples of different functions and technologies for the trade-off analyzer 524 are described below.

The cognitive unaided choice 506 may formulate and derive the data received from the data receiver 302 with the causal variables, the latent features, the probabilities and the trade-offs on activity data including attributes, features, traits, preferences, behaviors, the cognitive and context data for the user and the group. For example, the causality variable may be a proficiency as causal variable for effective assignment, the latent feature learning 518 may derive a "service quality" feature generates faster turnaround output, the probabilities generator 522 of the user may derive likelihood of completing check-in tasks on time and trade-off analyzer 524 may derive choice of baggage counter, instead of check-in counter, where bottleneck could be higher. The cognitive unaided choice engine 538 may get causality variables and probabilities to initiate a learning method, such as proactive-retroactive learning that may influence "unaided" assignment and allocation based on features including attributes, factors, traits, preferences, behaviors and other cognitive and context data for the user and importance thereof and deduce "unaided" cognitive state such as pre-decided, unaided action, unaided expected response and unaided reward, such as paying for overtime of the user for the product and activity for the plurality of unaided choices of the user and the group.

In an embodiment, the cognitive unaided choice engine 506 may autonomously formulate decision tree and behavior tree methods, decisions and their possible consequences, including chance event outcomes, resource costs, utility, etc. The cognitive unaided choice engine 506 may build block of a behavior is a task rather than a state including, but not limited to, gradient boosting, bootstrap aggregation, Bayes optimal classifier, Markov chain, etc., and any combinations thereof, analyze dynamic semantic, procedural and episodic rules for information condition, and anomalies thereof, related to an activity. The cognitive unaided choice engine 506 may deduce optimal control policies for upper thresholds and lower thresholds of the current activity and the target activity of the user for the plurality of unaided choices to aid a dynamic optimal response for each user modeled as a quantum candidate and may use sheafing methods or other techniques as structure-preserve mapping, morphism, disjoint union, combined with stochastic and optimal control methods to aggregate for the group or network. The unaided choices may be choices that people can recognize as a choice out of a list of choice-sets without any prompt or trigger. For example, when the number of travelers increases, the unaided choice engine 506 may deduce top three choices, a) additional support staff to existing check-in counters, b) additional counter for over-baggage, c) additional staff to prioritize travelers flying in earlier flights. Further, the cognitive unaided choice engine 506 may transmit the plurality of choices to present on cognitive user interface 502 for the user.

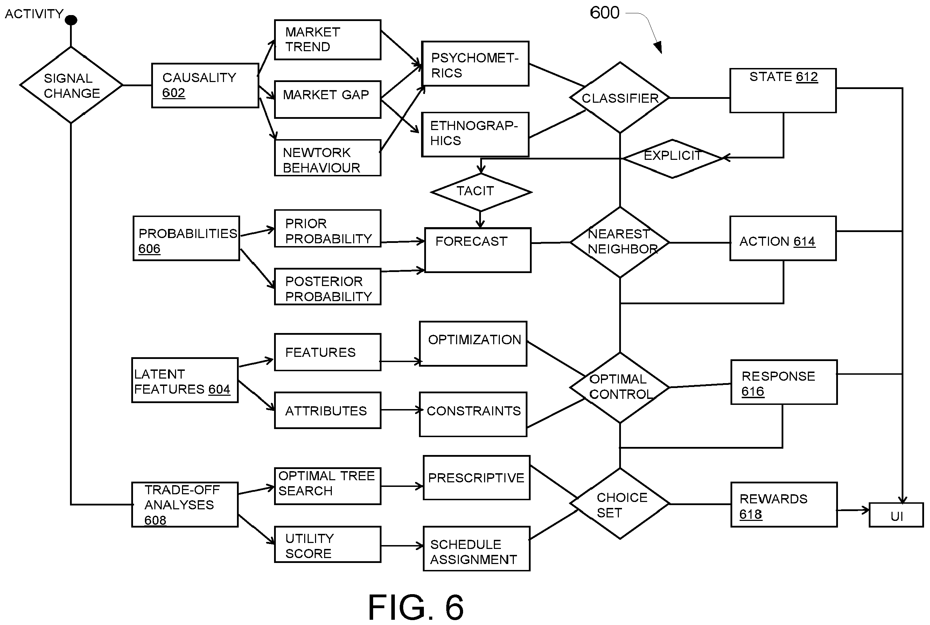

FIG. 6 illustrates a learning method 600 for providing the cognitive and context data to the knowledge processor, according to an embodiment of the present disclosure. The method 600 forecasts, optimizes, prescribes and assigns an action in response to an activity of a user. The method 600 may be used for a computer readable machine learn autonomously that is performed by the cognitive operating system 100.

At block 602, a signal change data of the user's activity is trained to determined trends, gaps and group or network behavior including but not limited to psychometric, ethnographic, cluster analysis, for causality and classifier of the user's activity for a state content as shown in block 612 for the state for the user's current action, such as transactional, activity, product, market, financial, etc. as action content shown in block 614. For the user's current response, such as transactional, activity, product, market, financial, etc. as response content shown in block 616 for the response provider 532. The signals may also be trained to determine the user's reward, such as transactional, activity, product, market, financial, as rewards content shown in block 618. The signal change data may be related to immediate relevance including dynamic explicit knowledge based on a new activity data, or be related to tacit knowledge an update to a previously stored activity data or data received from the knowledge processor 116 or the access device 104 of the current activity or the target activity of the user. Other cognitive and context data that are neither new nor update nor deemed relevant to the activity may be determined as noise based on causality analysis for the choice-set that orderly organized in UX manager for the cognitive user interface 502 of the user's activity.

At block 604, the signal change data of the user's activity is trained to learn latent features and attributes and formulate optimization, constraints and optimal control policies for the current state, such as physical, operational, financial, cognitive, behavioral, emotional, etc. for the forecast of user's current state 612, action 614, response 616, and rewards 618. The signal change data may be related to immediate relevance including dynamic explicit knowledge and, therefore, apply a certain set of rules that are associated with dynamic, real-time, sequential monadic, paired-comparison, imperfect or asymmetric information conditions and any combination thereof on multi-dimensions. The signal change data may be related to tacit knowledge relevance including data previously stored, previous time period, previous activity, such as the historical knowledge and, therefore, may apply a certain set of rules associated with static, linear, continuous, paired comparison, perfect and complete information conditions and any combination thereof on multi-dimensions. The signal change data may neither be explicit knowledge nor be tacit knowledge, and, therefore apply a certain set of rules associated with non-parametric, non-linear, age dependent and incomplete or partial-complete information conditions and any combination thereof on multi-dimensions, attributes and features may be applied to optimize choice-set that orderly organized for cognitive-UX 502 of user's activity. For example, the resource assignment system analyzes activity data and latent feature and attribute data from cognitive and context database 120 to optimize the station assignment in the retail store. This may change with new features, conditions and models and thereby the underlying latent feature variables in the marketplace to affect choice-set for assignment that may likely to increase in revenue.

At step 606, the signal change data of user's activity is trained to generate probabilities including probabilities distribution, prior and posterior, for the forecast of user's current state 612, the action 614, the response 616, and the rewards 618. The signal change data may include the activity content, cognitive and context data and other measured metrics that may indicate the current activity of the user. The signal change may apply the rules of explicit knowledge and tacit knowledge or neither for probabilities 606 and thereby forecast choice-set. The probabilities 606 may include determining a probability associated with the choice-sets that orderly organized for the cognitive interface 502 of user's activity. For example, the resource assignment system analyzes the activity data and the cognitive and context data to forecast sales to derive customer arrival pattern and with upgraded skills and attributes. This would enable forecast resource capacity at various stations in the retail store to affect choice-set for cost of allocation and schedule resources that may improve coverage.

At step 608, the signal change data of user's activity is trained to analyze trade-offs for the optimal search and utility score of the current state 612, the action 614, the response 616, and the rewards 618. The signal change may apply the rules of explicit knowledge and tacit knowledge or neither for the probabilities 606 and thereby trade-offs choice-set. The trade-off analyses may include determining a prescribed choice-set and schedule assignments that orderly organized in for the cognitive-UX 502 of user's activity. For example, the resource assignment system formulate trade-offs resources between various stations based on skills or feature, proficiency and preferences and thereby generate optimal choice-set for schedule station assignment and allocation that may likely provide greater capacity during peak-hour sales and adequate coverage during off-peak hours to follow the action and to reward as reduced costs.

At step 622, the state 612, the action 614, the expected response 616, and the reward 618 may be applied to the user's explicit knowledge and the tacit knowledge and user's nearest neighbor in the group or network of users, where user is a member. Thereafter the classifier, the nearest neighbor optimal controls and choice-sets may be determined and may be orderly organized for the cognitive interface 502 of the user's activity.

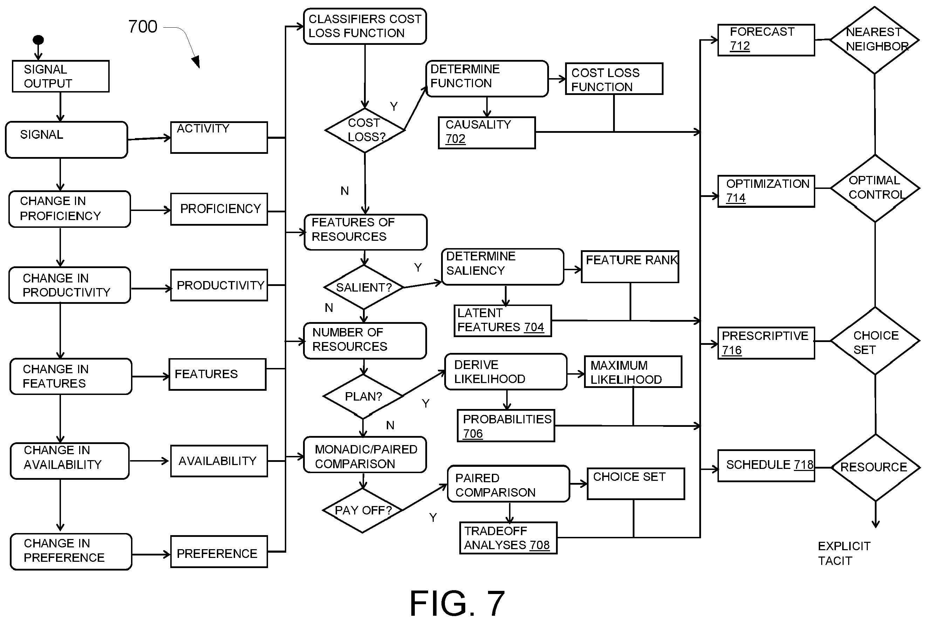

FIG. 7 illustrates a method 700 for executing Dynamic Algebraic Causal Subsequence (DACS) as sequencing learning, according to an example embodiment of the present disclosure. The method 700 may be executed by the cognitive operating system 110 to a knowledge processor 116 in cognitive and context data 122 within PCB 300 for the user and/or the group or network where user is a member based on collective information interactions. The method 700 may be trained for machine to learn that is performed by the cognitive operating system 110.

At block 702, signal output data 504 of the user determines causality 602, also depicted causal determinant 516, for explicit knowledge 212 and tacit knowledge 214 and recorded in the knowledge processor 116 and stored in cognitive and context data. The activity data, of the user or a resource, ascertains the change in factors including, but not limited to, proficiency, productivity, skills or features, availability, preferences, etc. may enable the cognitive operating system 110 to apply a conditional dependency programming ("CDP"), a causal substructure whereby user's probabilistic events, as vertices, in which the likelihood of an event may be calculated from the likelihoods of its predecessors. The time associated with a vertex, conditional probabilities as Bayesian Network ("BN"), HMM, Bayesian Programming, etc. may increase or decrease as the user follows any path in the graph. This also determines the cost or loss function associated with such conditional dependencies, for the user or set of users as a group, where user is a member based on a new activity as explicit knowledge 212 and/or update to a previously stored activity data as tacit knowledge 214 within a certain pre-determined time. For example, the assignment and allocation of resources to various stations or counters at the airport may segment into sub-segments of CDP based on the forecast 712 of number of users or resources likely to attend or not attend ("no-show"), after a lower bound, to optimize 714 capacity and coverage of traveler-flow and thereby prescribe 716 choice-set for schedule assignment 718 of resources.

At block 704, the signal output data 504 of the user determines latent features 604, also depicted as latent feature learner 518, for explicit knowledge 212 and tacit knowledge 214 and recorded in the knowledge processor 116 and stored in cognitive and context data 122 within PCB 300. The activity data, of the user or a resource, ascertains the change in factors including, but not limited to, proficiency, productivity, skills or features, availability, preferences, etc. may enable the cognitive operating system 110 to apply the CDP or as Stochastic Cognitive Algebraic Neural Network ("SCANN") consisting of multiple layers of interconnected nodes which are parameterized by the weights - as classification, supervised feature learning, unsupervised feature learning, sheafing, group theory, category theory, combinatorics, etc. may increase or decrease as the user follows any path within the network, depending on the geometry of the growth, for example, whether it be from a single point radially outward or from a plane or line, of clusters where the user is a member. This also determines the feature saliency associated with such conditional dependencies for the user or set of users as a group, where user is a member based on a new activity as explicit knowledge 212 and/or update to a previously stored activity data as tacit knowledge 214 within a certain pre-determined time. For example, the assignment and allocation of resources to various stations or counters at the aircraft ground engineering stations may segment into sub-segments of CDP based on the forecast 712 of number of salient skills or features, such as aeronautical, electrical, mechanical engineers, users or resources likely to be available as a lower and upper bound, to optimize 714 throughput of workflow and thereby prescribe 716 choice-set for schedule assignment 718 of resources.

At block 706, the signal output data 504 of the user determines probabilities 606, also depicted as probabilities generator 522, for explicit knowledge 212 and tacit knowledge 214 and recorded in the knowledge processor 116 and stored in cognitive and context data 120. The activity data, of the user or a resource, ascertains the change in factors including, but not limited to, proficiency, productivity, skills or features, availability, preferences, etc. may enable the cognitive operating system 110 to apply a conditional dependency programming, a stochastic process as discrete-time and continuous-time stochastic process where value changes between two index values, often interpreted as two points in time, may increase or decrease as the user follows path within the stochastic process. For example, may have one additional parameter, the position of the decision bound. If at time t of the activity data of the user is x, the distribution of the activity at a future time may be s > t, hence the term "forward" stochastic process. The backward stochastic process, on the other hand, may be useful when address the question that given that the user at a future time s has a particular behavior, the distribution at time is t < s. This may impose a terminal condition on the CDP, which is integrated backward in time, from s to t. There are standard techniques like stochastic differential equation (SDE) for transforming higher-order equations into several coupled first-order equations by introducing new unknowns, for example,

$$\frac{dx(t)}{dt} = F\big(s(t)\big) + \sum_{\alpha=1}^{n} g_\alpha(x(t))\xi^\alpha(t)$$

where $x \in X$ is the position in the system in its phase space, assumed to be a differentiable manifold, the $F \in TX$ is a flow vector field representing deterministic law of evolution, and is a set of vector fields that define the coupling of the system to Gaussian noise $\xi^\alpha$. This also estimates the maximum likelihood associated with such conditional dependencies for the user or set of users as a group, where user is a member based on a new activity as explicit knowledge 212 and/or update to a previously stored activity data as tacit knowledge 214 within a certain pre-determined time. For example, the assignment and allocation of resources to various stations or counters at a retail restaurant may segment into sub-segments of CDP based on the forecast 712 of unit sales, such as coffee at a drive thru, burgers at a counter and their maximum likelihood to determine number of users or resources likely to be needed to optimize 714 capacity and coverage of all stations and thereby prescribe 716 choice-set for schedule allocation and assignment 718 of resources.

At block 708, the signal output data 504 of the user determines trade-offs 608, also depicted as trade-off analyzer 310, for the explicit knowledge 212 and the tacit knowledge 214 and recorded in the knowledge processor 116 and stored as cognitive and context data. The activity data, of the user or a resource, ascertains the change in factors including, but not limited to, proficiency, productivity, skills or features, availability, preferences, etc. may enable the cognitive operating system 110 to apply the CDP that the user may make with full comprehension of the advantages and disadvantages in monadic and with paired-comparison of each setup. A choice set attribute may comprise one or more features and attributes, such as one or a combination of sensory attributes, for example, taste, appearance, and rational, such as proficiency, and productivity and psychological/emotional, such as feel-good factor, and lifestyle. Each choice set attribute is expressed as j...J with each attribute having scale of m. Variables are shown as x...X and a choice for one over another is expressed as (1....i) of X. A stochastic subprocess may be executed to determine expectations by updating the probability of the user (n) being in an unobserved trade-off state s at time t, that further derives the cognitive state for each choice associated with a choice set attribute. A multi-dimensional optimizing factor determined using Monte Carlo Markov Chain ("MCMC"), Hidden Markov Model (HMM), quasi-Newton, quadratic programming, MINLP or another technique to find the optimal weights at each gradient of an activity-based choice. Examples of the attributes are described above and may also include a decision or a preference. A relational clique $c \in c$ is a construct of a clique over all activities of one or more users. Each clique C is associated with a potential function $\emptyset_c(v_c)$ that maps a tuple. Together they provide the activity-based choice-set, the cognitive and context and transition of consecutive activities as expressed by the following equation $\Sigma_y \Pi_{c \in c} \Pi_{v' c \in c} \emptyset_c(v'_c)$. However, given the large number of parameters to be estimated, the cognitive operating system 110 may run a dynamic programming including, but not limited to, constrained quadratic programming and constrained mixed-integer non-linear programming. This also determines the choice-set associated with such conditional dependencies for the user or set of users as a group, where user is a member based on a new activity as explicit knowledge 212 and update to a previously stored activity data as tacit knowledge 214 within a certain pre-determined time. For example, the assignment and allocation of resources to various stations or counters at the hospital may segment into sub-segments of CDP based on the forecast 712 of types of patient arrival for emergency at an ICU, or pregnancy at a nursing home and their maximum likelihood to determine skills or features of nursing users or resources and their proficiencies likely to be needed. This may optimize 714 recovery time and turnaround cycle of all stations and thereby prescribe 716 choice-set for schedule station allocation and assignment 718 of resources.

At block 722, the signal output data 504 of the user determines trade-offs 608, also depicted as trade-off analyzer 524, for explicit knowledge 212 and tacit knowledge 214 and recorded in the knowledge processor 116 and stored in cognitive and context database 120. The activity data, of the user or a resource, ascertains the change in factors including, but not limited to, proficiency, productivity, skills or features, availability, preferences, etc. may enable the cognitive operating system 110 to apply the CDP for the user. For example, the assignment and allocation of resources to various stations or counters at a marketplace retail outlet may segment into sub-segments of CDP based on the forecast 712 of type of food, such as Asian, Italian, Bistro may be driven by user choice to determine skills or features of service users or resources and their proficiencies likely to be needed. This may be used to optimize 714 cost or loss function cycles of all stations and thereby prescribes 716 choice-set for schedule station allocation and assignment 718 of resources.

At block 724, the signal output data 504 of a group or network user determines trade-offs 608, for the explicit knowledge 212 and the tacit knowledge 214 and recorded in the knowledge processor 116 and stored in cognitive and context database 120. The activity data, of a group or network of user or a resource, where user is a member, ascertains the change in factors including, but not limited to, proficiency, productivity, skills or features, availability, preferences. Users as the quantum candidates are aggregated into groups as a function of one or more of time, location, transition and constraints. The aggregation may include an aggregation of each user's decisions into groups. The sheafing method, for example, may be used for the aggregation into groups. The sheafing method may be used for systematically tracking each user's data attached to open sets of a topological space. A group of user cognitive sets, which may be represented by $\{X_i\}_{i \in I}$, is disjoint if $X_i \cap X_j = \emptyset$ whenever $i \neq j$. The union of a disjoint family may be expressed as $\coprod_{i \in I} X_i$. Given a disjoint family of cognitive states, $\{X_i\}_{i \in I}$ there is an isomorphism, where each arrow (aggregated for multiple groups) has a specified domain and co-domain group in partially ordered cognitive sets P which may be expressed

$$p(\coprod_{i \in I} X_i) \xrightarrow{\overset{=}{\phantom{a}}} \Pi_{i \in I} p(X_i) ;; S \mapsto (S \cap X_i)_{i \in I}.$$ For example, the assignment and allocation of resources to various stations or counters at a manufacturing unit may segment into sub-segments of CDP based on the forecast 712 of number of parts, such as chassis, engine, battery assembled and tested by a group of users, where the user is a member, to determine different skills/features of users or resources and their proficiencies likely to be needed. This may optimize 714 production and inventory cycle of all stations and thereby prescribe 716 choice-set for schedule station allocation and assignment 718 of resources.

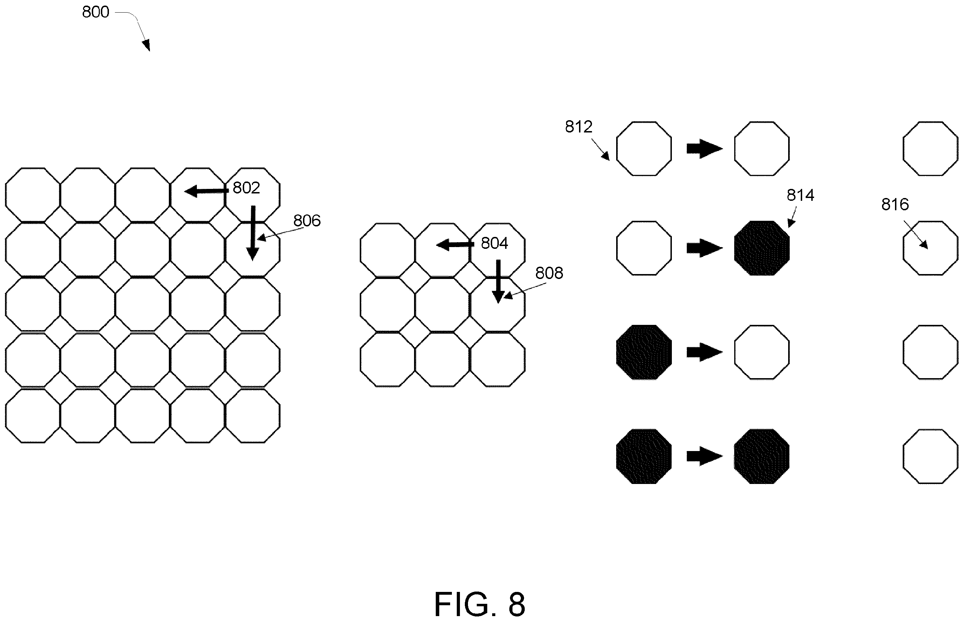

FIG. 8 illustrates a method 800 for executing DACS for the explicit knowledge 212 and the tacit knowledge 214 in the knowledge processor 116, according to an embodiment of the present disclosure. The method 800 may be executed by the cognitive operating system 110 to a knowledge processor 116 in cognitive and context data 122 for the user and/or the group or network where user is a member based on collective information interactions. The method 800 is employed for arranging information in determining sequence ordering rule based on a cognitive and context data 122 structure for the user or a machine. This may include choices in the plurality of choice-set determined and forecast, optimization, prescriptive and assignment for state, action, response and reward may include a maximum likelihood estimation of each choice-set for the activity of the user. The method 800 may be used for a computer readable machine learn autonomously that is performed by the cognitive system 102.

In block 802, for example, that a set of explicit knowledge data 212 and/or tacit knowledge data 214 in activity may be determined for each user (n). Further, more users are added to the activity content that form choices and different choice set attributes. The attributes may describe a factor that influences a choice. A choice set attribute may comprise one or more attributes, for example, of the user or machine such as one or a combination of sensory attributes, (profile, appearance, etc.), rational (proficiency, productivity, etc.) and psychological/ emotional (feel good, motivation, etc.). A choice from the choice set (j...J) with feature variables are shown as $X$ and a choice for one over another is expressed as (1....i) of $X$, that was selected by a machine - the trader or partner - is determined and the maximum likelihood probability for that choice may be used to determine the expected cognitive state defined as:

$$P_r^n(j) = \frac{1}{B(j)} \prod_{i=1}^K X_i^{j_i - 1}$$

· The expected cognitive states for each machine's decision on a choice-set are accumulated based on the last activity performed for machines 1 to N. A relational activity model is used to accumulate the cognitive states. A relational clique is a construct of a clique over all activities at various states on a trajectory, which may be a travel path of one or more machines. Each clique C is associated with a potential function that maps a tuple (values of decisions or aggregations). Together they provide a) activity-based decision, b) state and c) actions of consecutive activities as expressed by the equation $\Sigma_y \Pi_{c \in c} \emptyset_c(v'_c)$. Since each machine is modeled as a quantum candidate, for example, each machine's last decision is modeled as a function of one or more of time, state, transition and constraints. A single machine's cognitive state, therefore, is determined and then Z is defined, where Z is the probability statistical distribution of finding the machine in any particular cognitive state associated with a decision U, machines N and state-density V. Z is proportional to the degeneracy of the accumulated cognitive states (of $\mathbb{R}$ as in Relational activity model). Such machine probabilities are Dirichlet distributed, and expressed as:

$$D(P|A) = \frac{\Gamma(A_0 + A_1 + \cdots A_m)}{\Gamma(A_0)\Gamma(A_1)\ldots\Gamma(A_m)} p_0^{A_0 - 1} p_1^{A_1 - 1} \ldots p_m^{A_m - 1},$$

where the A vector {A0, A1,...Am} is the Dirichlet parameter vector. This forms a "subsequence" - a sequence that may be derived from another sequence by deleting some or no elements without changing the order of the remaining elements. For example, the sequence $\langle A_1, A_3, A_4 \rangle$ is a subsequence of $\langle A_1, A_2, A_3, A_4, A_5, A_6, A_7 \rangle$ obtained after removal of elements A2, A5, A6 and A7. The ideas of selecting infinitely many choices from a sequence and using an increasing function to enumerate a selection of terms are equivalent. If the user has an infinite set of choices that may be enumerated with a function $f$. Conversely, an increasing function $f$ defines a selection of choices with indices in the choice-set of $f$.

In block 804, further, that a set of explicit knowledge data 212 and/or tacit knowledge data 214 in activity may be determined for nearest neighbor or a group or network, where user is a member, with different clusters based on activity and/or factors for each choice set as a function of activity and interactions within nearest neighbor or a group or network, where the user is a member. Each user, for example, may be in plurality of spin states - a measure of maximum likelihood estimate for choices in the choice-set, say two states where one state is designated by A, ↓ or +1, and the other by B, ↑ or -1. The total number of spins (nearest neighbor states) is $B$, the number of +1 spins is N or NA and the number of -1 spin is by $B$- N. The intensity of action, I, may be conveniently defined as the net number of -1 spins. The intensity of action per spin, I, is then

$$I = \frac{I}{B} = 1 - 2\frac{N}{B} = B - 2\rho$$
,

where $\rho$ = N|B. Then the canonical ensemble is:

$$Q_m(B, I, T) = j_m(T)^B \sum_{i=1}^{\Omega} e^{-E_i/kT}$$
,

where $E_i$ is the sum of nearest-neighbor (pair) allocation for the ith configuration and $j_m$ represents the non-configurational assigned (partition) function of each of the $B$ partners of the system. Since the subsequence in nearest-neighbor or a group or a network, where user is a member, is "algebraic" nature of addition, multiplication and division, such results are often grouped together. The original sequences may converge, and then all subsequences for nearest-neighbor or a group or a network, where user is a member, converge to the same limit.

At 806 indicates a directed subsequence that has a topological ordering, a sequence of the vertices such that every edge is directed from earlier to later in the sequence a set of explicit knowledge data 212 and/or tacit knowledge data 214 in activity of the user and/or user's activity content between users in a group for cognitive and context database 120. The cognitive and context data in one cell may use the value from another cell, a topological ordering of this may be used to update all cell values when the data 122 is changed between users in a group, thus forms a graph structure of the network. The same topological orderings of directed subsequence may be used to order the compilation operations in storing cognitive and context data 122. The cognitive operating system 110 may enable, in contrast to arbitrary graphs, DACS to use shortest path algorithms and longest path problems using various methods including, but not limited to, simulated annealing, cellular automata, dynamic programming, molecular dynamics, stochastic gradient descent ("SGD"), quasi-Newton, optimal tree-search, sequential Monte Carlo, etc. to find globally optimal space or station. For example, the user or resource in airline counter get assigned based on customer relation skill (feature) and computer skills (new feature) as an explicit knowledge 212 and designs a customer relations sequencing mechanism as form of tacit knowledge 214 that is used for boarding order at the gate stored in the cognitive and context database 120.

At 808, indicates a directed subsequence that has a topological ordering, a sequence of the vertices such that every edge is directed from earlier to later in the sequence a set of explicit knowledge data 212 and/or tacit knowledge data 214 in activity of a nearest-neighbor or group or network activity content, where user is a member, between users in a group for cognitive and context data 122. The user activity in a group may be combinatorial, imperfect and incomplete information conditions much in the same way as graph probabilities, as formalized, are accessible in random graph. The cognitive operating system 110 may enable, in contrast to arbitrary graphs, DACS to use shortest path algorithms and longest path problems using various methods including, but not limited to, simulated annealing, cellular automata, dynamic programming, molecular dynamics, Stochastic Gradient Descent ("SGD"), quasi-Newton, optimal tree-search, sequential Monte Carlo, etc. to find globally optimal space or station in asymmetric, perfect and incomplete information conditions. For example, the user or resource in airline counter get assigned based on customer relation skill and on-boarding skills to form the explicit knowledge 212, without knowing skills or features of other users or resources and/or traveler expectations, designs a customer relations sequencing mechanism as form of the tacit knowledge 214 that is used for boarding order at the gate.

At 812, in non-identifiable choices may be dynamic and/or in active workspace as the choice data of the user "wait" for more signal data and/or activity data to make "capacity" or lack of capacity on the existing signal data. The choice may affect as add or reduce in the "capacity" of explicit knowledge data 212 and/or tacit knowledge data 214 in storing cognitive and context data 122 for activity of user and nearest-neighbor or group or network, where user is a member. For these actions a new set of information is required, as new cell, C, and a local counter variable $\tau_C$, therefore, basically constraining the number of input signals for which the choice has best-matching unit. For example, the user or resource in airline counter get assigned based on customer relation skill and on-boarding skills to form the explicit knowledge 212, may wait to confirm, say "capacity" of the counter to handle number travelers in queue, to complete information in "search" state of mind for decision. At the same time, the supervisor's system may wait for the service system to request for "capacity" of the various counter or station information for service system decision.

At 814, in non-identifiable choices may be dynamic and/or in active workspace as the choice data of the user "wait" for more signal data and/or activity data to make "coverage" or lack of coverage on the existing signal data. The choice may affect the coverage of explicit knowledge data 212 and/or tacit knowledge data 214 in storing cognitive and context data 122 for activity of user and nearest-neighbor or group or network, where user is a member. For these actions a new set of information is required, as new cell, C, and a local counter variable $\tau_C$, therefore, basically constraining the number of input signals for which the choice has best-matching unit. For example, the user or resource in airline counter get assigned based on customer relation skill and security skills to form an explicit knowledge 212, may wait to confirm, say coverage of the check-in counter as well as security counter to handle number travelers in queue, to complete information in search state of mind for decision stored in the cognitive and context database 120.

At 816, non-identifiable choices may be dynamic and/or in active workspace as the choice data of the user to make channel or release of channel with best matching neighborhood cells that constraints path on the existing signal data. The choice may affect the channel of explicit knowledge data 212 and tacit knowledge data 214 in storing cognitive and context data for the activity of user and nearest-neighbor or group or network, where user is a member. The channeling effect is if the direction of a subsequence incident upon the surface of a pattern lies close to a major pattern direction, the user activity with high probability may only do small-angle scattering as it passes through the several layers of user choices in the pattern and hence remain in the same pattern 'channel'. If it is not in a major pattern direction or plane, random direction, it is much more likely to undergo large-angle scattering and hence its final mean penetration depth is likely to be shorter. For example, the user or resource in airline counter get assigned based on customer relation skill and security skills to form an explicit knowledge 212, may wait to confirm, say "coverage" of the all the counters in the on-boarding process to channel number travelers in queue, in a pattern of subsequence, to faster complete information in "search" state of mind for decision. At the same time, the supervisor's system may wait for the service system to request for "coverage" of the various counter or station information before channeling service system decision.

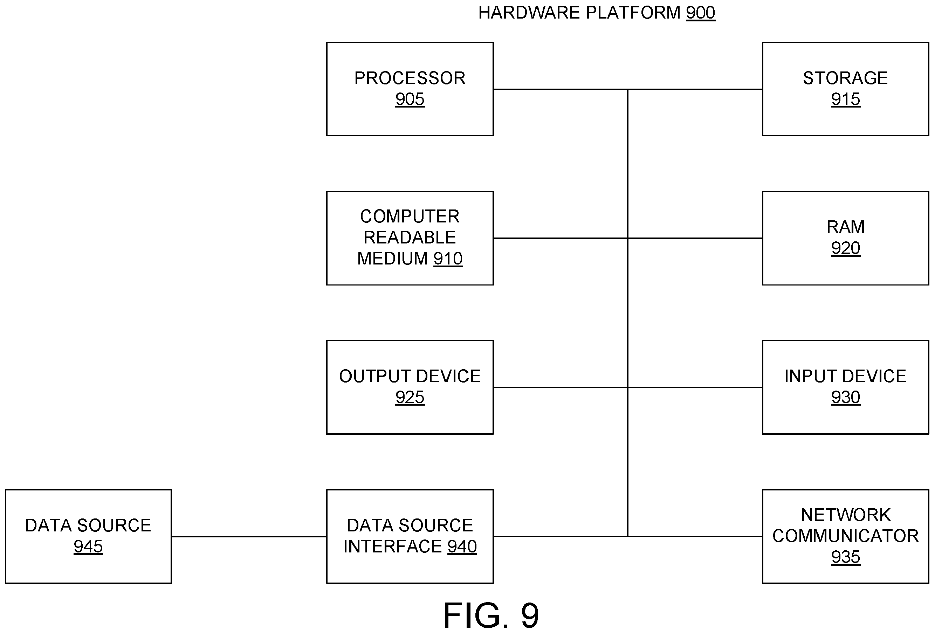

Fig. 9 illustrates a hardware platform 900 for embodiment of the system 102, according to an example embodiment of the present disclosure. Particularly, computing machines such as but not limited to internal/external server clusters, quantum computers, desktops, laptops, smartphones, tablets and wearables which may be used to execute the system 102 or may have the structure of the hardware platform 900. The hardware platform 900 may include additional components not shown and that some of the components described may be removed and/or modified. In another example, a computer system with multiple GPUs can sit on external-cloud platforms including Amazon Web Services, or internal corporate cloud computing clusters, or organizational computing resources, etc.

Over the Fig. 9, the hardware platform 900 may be a computer system 900 that may be used with the examples described herein. The computer system 900 may represent a computational platform that includes components that may be in a server or another computer system. The computer system 900 may execute, by a processor (e.g., a single or multiple processors) or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory). The computer system 900 may include a processor 905 that executes software instructions or code stored on a non-transitory computer readable storage medium 910 to perform methods of the present disclosure. The software code includes, for example, instructions to detect an issue and forward the issue for processing, collect data from other employees and teams, analyze the data to determine a solution for the issue and provide the solution to the employee.

The instructions on the computer readable storage medium 910 are read and stored the instructions in storage 915 or in random access memory (RAM) 920. The storage 915 provides a large space for keeping static data where at least some instructions could be stored for later execution. The stored instructions may be further compiled to generate other representations of the instructions and dynamically stored in the RAM 920. The processor 905 reads instructions from the RAM 920 and performs actions as instructed.

The computer system 900 further includes an output device 925 to provide at least some of the results of the execution as output including, but not limited to, visual information to the employees about the solution and response to their query. The output device 925 can include a display on computing devices and virtual reality glasses. For example, the display can be a mobile phone screen or a laptop screen. GUIs and/or text are presented as an output on the display screen. The computer system 900 further includes input device 930 to provide a user or another device with mechanisms for entering data and/or otherwise interact with the computer system 900. The input device may include, for example, a keyboard, a keypad, a mouse, or a touchscreen. In an example, output of a bot is displayed on the output device 925. Each of these output devices 925 and input devices 930 could be joined by one or more additional peripherals.

A network communicator 935 may be provided to connect the computer system 900 to a network and in turn to other devices connected to the network including other clients, servers, data stores, and interfaces, for instance. The network communicator 935 may include, for example, a network adapter such as a LAN adapter or a wireless adapter. The computer system 900 includes a data source interface 940 to access data source 945. A data source is an information resource. As an example, a database of exceptions and rules may be a data source. Moreover, knowledge repositories may be other examples of data sources.

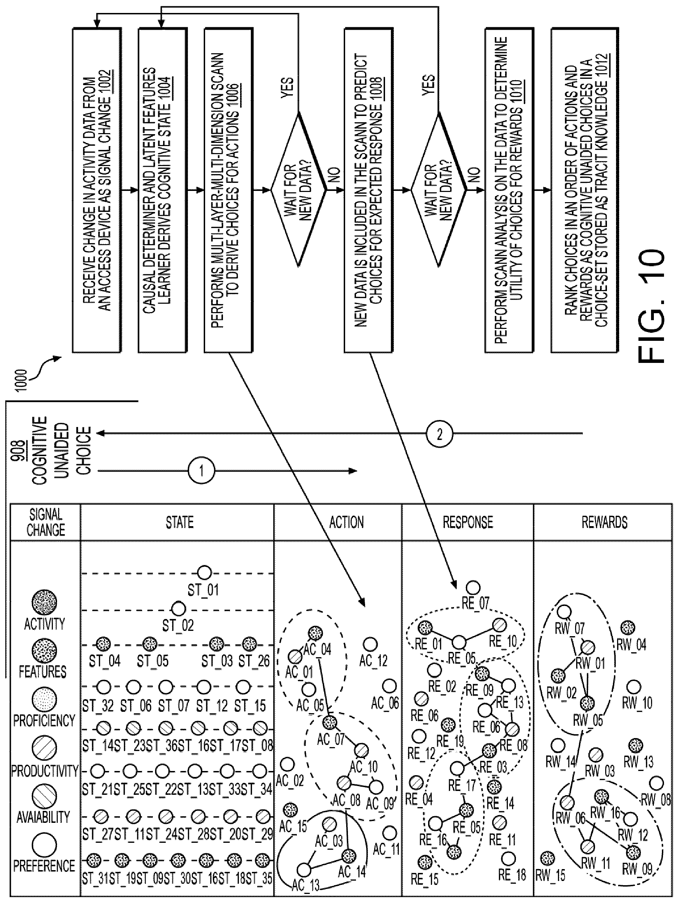

FIG. 10 illustrates evolution of Stochastic Cognitive Algebraic Neural Network (SCANN) - a learning method 1000 (hereinafter referred to as method 1000), in accordance with an embodiment of the present subject matter. The method 1000 may be executed by the cognitive operating system 110. The method 1000 provides for the evolution of SCANN learning method and the learning maturity on arranging information that changes over time in determining cognitive unaided choice-set, in the sequence of cognitive state, actions, response and reward as outcome, based on activity data for the individual or a machine. The method 1000 may be used for a computer readable machine to learn autonomously that is performed by the cognitive operating system 110 shown in FIG. 1.

At 1002, the change in individual's activity data, a signal, is determined and, as time progresses, the dynamic conditions subsequently change the original data and a signal change. The signal change could be first, second ...nth derivative of the original data. For example, the individual traveler provides travel related information, in the first instance, where original destination is London. In the second instance, the destination changes to Australia and in the third, to the US and in the fourth, to London again.

At 1004 the signal or signal change data is processed, for instance by the causal determiner 518 and the latent feature learner 520, the probabilities generator 522 and the trade-off analyzer 310. The cognitive state of the individual as derived in state 510 which includes, but not limited to, physical state, biological state, financial state, behavioral state, etc., based on latent factors such as features, attributes, attitudes, behavior, motivations, preferences, proficiency, etc. may be determined. The cognitive state is determined as one state with the highest correlated rank in multi-layered-multi-dimension analyses at a given time, as described earlier in the latent feature learner 520. For example, the individual traveling to London for a meeting with his doctor, is in "concerned" cognitive state, as there is very little transit time for a connecting flight.

At 1006 the signal or signal change data is processed by causal determiner 518 and the latent feature learner 520, with the probabilities generator 522 and the trade-off analyzer 310. The plurality of choices for action of the individual as derived in action 512 of the individual may be determined. Now, since some information may not be available to take any actionable decision, the cognitive operating system 110 creates an active workspace where other data "waits" for additional data the Voronoi region, to establish link. In addition, the new cell data in different layers in multi-layered-multi-dimension structure, as in FIG. 10, may be introduced, changed or reduced and establish link, until the additional data arrives. For example, the individual traveling to London for a meeting with his doctor, is in "concerned" cognitive state, as there is very little transit time for a connecting flight, as there is no gate information of the connecting flight and "waits" for information which will enable the individual to determine the distance from arrival gate and walking time to connecting flight gate.

As time progresses, for example, the parameters in rules associated with the explicit knowledge 212 or the tacit knowledge 214 or neither may change and/or eliminated, and thereby change forecast, optimization, prescription and assignment that determine the choice data in cognitive and context data 120. As time progresses, at each step of determining the state data, the action data, the expected response data, and the reward data also change optimal controls for the individual and groups. The Voronoi region $F_C$ as described in 1006, by an n-dimensional hypercube with a side length equal to the mean length $\bar{l}_C$ of the edges emanating from $C$ with $\bar{l}_C$ computed by $\bar{l}_C = 1/_{card}$ $(N_C)\Sigma_{i \in N_C}\|w_C - w_i\|$. For example, the individual traveling to London for a meeting with his doctor, is in "concerned" cognitive state, as there is very little transit time for a connecting flight with no gate information of the connecting flight expect the gate information by the time the individual arrives in connecting destination, nevertheless take action to search for alternative flights time and their expected time of arrival at London. Thereafter, new data is included in the SCANN to predict choices for expected response at 1008.

At 1010, as time progresses, the inference dynamics engine 542 may autonomously change dimensionalities the explicit knowledge 212 or the tacit knowledge 214 and therefore apply different techniques such as TA, EA, UA, DBN, SVM, EQG, QSM and QDT for different MLE for the individual and the nearest-neighbor or group or network, where individual is a member. For the method 1000, the true dimensionality of the data may be a key factor, meaning the smallest dimensionality t, such, that a t-dimensional sub-manifold of V may be found containing all (or most) input data. Then t-dimensional hyper-cubes may be used to estimate the size of the Voronoi regions. However, to figure out the value of t, especially because the mentioned sub-manifold may not have to be linear but could be randomly twisted. Therefore, even analyses of the signal, state, expected response and reward data may not, in general, reveal their true dimensionality and remain "unaided", as cognitive unaided choice 538, but gives only (or at least) an upper bound.

However, the method may train machine learn and, therefore, may give some general rules for choosing such an estimate that do work well for all activities that may be encountered subsequently. For example, the individual traveling to London for a meeting with his doctor, is in "concerned" cognitive state, as there is very little transit time for a connecting flight with no gate information of the connecting flight expect the gate information and on the individual arrival, a crew member provides gate information and a resource is assigned, based on feature, proficiency, availability, etc. to quickly escort the individual from the arrival gate to the connecting flight gate as cognitive "unaided" choice to confirm in queue at the gate.

At 1012, as time progresses, the inference dynamics engine 542, may accelerate or decelerate the speed of information flow between signal and state and action, and expected response and rewards for explicit knowledge 212 or tacit knowledge 214 and, therefore, may apply different techniques such as TA, EA, UA, DBN, SVM, EQG, QSM and QDT for different MLE for individuals and the nearest-neighbor or group or network, where individual is a member. For the method 1000 this may support the two structural update operations: a) insertion of a cell, as a neuron; b) deletion of a cell, as a neuron. These operations may be performed such that the resulting structure consists exclusively of multi-dimensional structure $\mathcal{H}$.

Although such a data structure may be already sufficient in this example, a considerable search effort may be needed to make consistent update operations. The removal of a cell may require that also other neurons and connections may be removed to make the structure consistent again. Simple heuristics as, for example, to remove a node removing all neighboring connections and the node itself may not work properly. For this purpose, a tracking mechanism of all the $\bar{\mathcal{H}}$ may be introduced in the current network. Technically, a new data type simplex may be created, an instance of which contains the set of all nodes belonging to a certain $\mathcal{H}$. Furthermore, with every node associated to the set of those $\mathcal{H}$ the node may be part of. The two update operations can now be formulated as: a) a new node r may be inserted by splitting an existing edge qf. The node r may be connected with q, f, and with all common neighbors of q and f. Each $\mathcal{H}$ containing both q and f (in other words, the edge being split) may be replaced by two $\mathcal{H}$ each containing the same set of nodes as $\mathcal{H}$ except that q respectively f may be replaced by the new node r.

Finally, the original edge qf may be removed. The new $\mathcal{H}$ may be inserted in the sets associated with their participating nodes. b) to delete a node, it may be necessary and sufficient to delete all $\mathcal{H}$ the node may be part of. This may be done by removing the $\mathcal{H}$ from the sets associated with their nodes. The same may be done with nodes having no more edges. This strategy may lead to structures with every edge belonging to at least one $\mathcal{H}$ and every node to at least one edge. Therefore, the resulting k-dimensional structures may be consistent, that is, contain only k-dimensional $\mathcal{H}$. For example, the individual traveling to London for a meeting with his doctor, is in "concerned" cognitive state, as there is very little transit time for a connecting flight with no gate information of the connecting flight expect the gate information and on the individual arrival, a crew member provides gate information and a resource is assigned, based on feature, proficiency, availability, etc. to quickly escort the individual from the arrival gate to the connecting flight gate as cognitive "unaided" choice to confirm in queue at the gate. This may trigger individual to change the cognitive state (relieved), take action (organize local transport), get response (receive confirmation) and avail reward (meeting doctor on time) and optimize the throughput - the cycle-time of demand and capacity in the journey of experience.

Thereafter, an abstraction of dynamic and active workspace, as layer, is created for each optimized choice data for the explicit knowledge 212 or the tacit knowledge 214 and may use methods or other methods as described above for the choice of cognitive unaided choice-set 538 on activity of the individual. In a similar manner, an abstraction of dynamic and active workspace, as layer, is created for each optimized choice data for the explicit knowledge 212 or the tacit knowledge 214 as described above for nearest-neighbor or a group or network of the choice data for the group where the individual is a member.

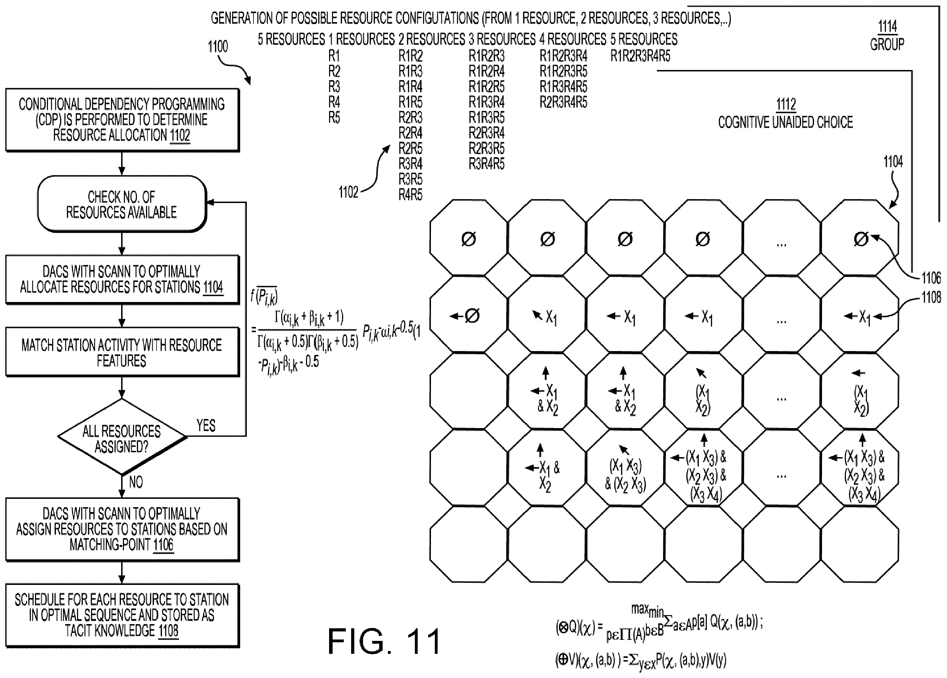

FIG. 11 illustrates a combined method 1100 for arranging information in determining sequence ordering rule, on conditional probability or likelihood of state, action, response and reward as the CDP, according to an example embodiment of the present disclosure. The method 1100 may be a combination of the Dynamic Algebraic Causal Subsequence (DACS) method 700 and method 800 combined, based on a Stochastic Cognitive Algebraic Neural Network (SCANN) method 900. The method 1100 may be executed as the CDP for allocation and assignment learning for the explicit knowledge 212 and the tacit knowledge 214. The method 1100 may be executed by the cognitive system 102 with the knowledge processor 116 using the cognitive and context data for the user and the group. This may include choices in the plurality of choice-sets determined and forecast, optimization, prescriptive and assignment for state, action, response and reward may include a maximum likelihood estimation of each choice-set for the activity of the user.

At 1102, the CDP structure may be provided by the user resources for allocation and assignment of the explicit knowledge data 212 and the tacit knowledge data 214 with the cognitive and context data on the activity that may be determined for each user. More users are added to the activity content that form choice combinations of different resources with latent feature attributes, given SCANN output for state, action, response and reward on activity of user with associated cost/loss function. The attributes may describe plurality of factors that influences a choice. A choice set attribute may comprise one or more attributes, for example, of the user as resource or a machine such as one or a combination of sensory attributes, such as profile, intuitiveness, rational, such as proficiency, and productivity and psychological or emotional, such as commitment, and motivation, and associated cost/loss function for activity of the user. The cognitive system 102 may use various techniques including, but not limited to Bayesian Inference, Markov Decision Process, HMM, Probability Density Function (PDF), Combinatorial optimization, Mixed Integer Non-Linear Programming (MINLP), Dynamic Programming, optimal tree-search, to determine such combination and it associated cost-loss function to forecast, optimize, prescribe and assign choice-set of resources.

In an example, the Bayesian Inference may be used. The cognitive operating system 110 may determine that the posterior probability density function of $\overline{P_{i,k}}$ is

$$f\overline{(p_{i,k})} = \frac{\Gamma(\alpha_{i,k}+\beta_{i,k}+1)}{\Gamma(\alpha_{i,k}+0.5)\Gamma(\beta_{i,k}+0.5)} p_{i,k}^{-\alpha_{i,k}-0.5} \left(1 - p_{i,k}\right)^{-\beta_{i,k}-0.5}$$

. Since the idea behind this sequential analysis modeling is completely similar to the decision-making process of a human being in his life, it may perform better with available methods in decision-making problems. For example, an employee or a resource in an airline service may be assigned to a task based on skills and feature, proficiency and availability of the employee. The assignment may also depend upon number of other employees that commit on the day to accept the schedule, therefore becomes conditional dependent for allocation and assignment to various stations, optimize the demand and capacity of the airline service.

At 1104, provides the DACS based on the SCANN to optimize resources and stations for allocation and assignment of the explicit knowledge data 212 and the tacit knowledge data 214 with the cognitive and context data, given as the CDP structure on the activity that may be determined for each user. Further, users and stations may be added to the activity content that form the DACS of different resources and stations matched with latent feature attributes, given SCANN output for state, action, response and reward on activity of user with associated cost or loss function. The attributes may describe plurality of factors that influences a choice. A choice set attribute may comprise one or more attributes, for example, of the as resource matched with the station attributes. The cognitive operating system 110 may apply DACS method 700 to construct the dominated point graph in most efficient manner that may reduce time and space for storing explicit knowledge 212 and tacit knowledge 214 with cognitive and context data 122 within PCB 300. The DACs method 700 may generalize conditional dependency programming and define sets, for example, as X, A and B that are finite. Since optimal policies are policies that may be in equilibrium, and there is always a pair, such as user resource or station of optimal policies that are stationary. The Bayesian Inference Bellman equations, and stems from the fact that user or machine resource may avoid being second guessed" during station assignment. For example, the resource in an airline service may be assigned to a particular station, say a security counter, based on features, skills and preferences without making any second guess of another station. An equivalent set of equations may be derived with a stochastic choice for the minimizer, and also with the roles of the maximizer and minimizer reversed. ($X \times (A \times B) \to \mathbb{R}$) over pairs of simultaneous choices:

$$(\otimes Q)(x) = \max_{p \in \prod(A)} \min_{b \in B} \sum_{a \in A} \rho[a] Q\big(x, (a, b)\big);$$

and

$$(\oplus V)\big(x, (a, b)\big) = \sum_{y \in X} P(x, (a, b), y) V(y)$$

Where this can be expressed as $V^* = \otimes\oplus(R + \gamma V^*)$. In general, it is necessary to solve a optimization program, including but not limited to linear program, MINLP, Dynamic Programming, to compute the update given above.

At 1106, provides the DACS method 700 and method 800 based on the SCANN method 1000 schedule the "match-point" (for user as resource and station as cell) for allocation and assignment of station for explicit knowledge data 212 and/or tacit knowledge data 214 with cognitive and context data 122 within PCB 300. The match point may be the optimal point where station features and resource features are matched for allocation and assignment. Further, users (or machine) as resource and stations (or cells) are added to the schedule of activity content that form the schedule of different resources and stations matched with latent feature attributes, given SCANN output for state, action, response and reward, method 900, on activity of user (or machine) with associated cost/loss function. Since the length of the sequences is the key factor that affects the performance of the algorithm; for the same type of sequences as the length (k) of sequences (s) increases, the number of levels in the corresponding DACS method 700 and method 800 may increase accordingly. Since the number of nodes in the levels may grow (nearly) exponentially as the level increases, the total number of nodes in DACS, method 700 and method 800 may explode as the sequence length increases, therefore, the scale of DACS, method 700 and method 800 for long sequences may be larger than that for short sequences. A match point p may be a k-dominant point and since the motivation of the dominant point based approach, for example, may be to reduce the time and space complexity of the dynamic programming based method, the key idea is, based on the observation, to match by the dominant points may contribute to the construction of the DACS, method 700 and 800. Since the number of dominant points can be much smaller than the number of all stations or cells, a dominant point approach may only identifies the dominant points, without filling the whole score table, may reduce the time and space complexity.

At 1108, provides the DACS method 700 and method 800 based on the SCANN method 1000 schedule the successor of a station or cell for each point in sequence for allocation and assignment of station for the explicit knowledge data 212 and the tacit knowledge data 214 with the cognitive and context data. Further, users as resource and stations may be added to the schedule of activity content that form the schedule of different resources and stations matched with latent feature attributes, given SCANN output for state, action, response and reward. The method 1000 may adopt a strategy called "retention" and "attrition", like human-memory, to control the scale of the graph. The retention is related to the resources that would be retained or kept for continuous or subsequent events and activities. The attrition is related to resources that may gradually be reduced for continuous or subsequent events and activities. Specifically, once a new level of node is created, all the nodes in the graph with no incoming edges may be outdated and may be deleted, because they may no longer be successors of any subsequent node and their partial DACS may not be changed any more. Therefore, they may not affect the construction of DACS, method 700 and 800 in the following procedure when they are deleted. Thus, timely deleting these outdated nodes may greatly reduce the scale of graph and save a lot of memory. This may adjust the source node, and at any moment, only the nodes in current level and the nodes with incoming edge in the previous level are kept in memory. Moreover, once the method 700 and 800 construction is finished, only the end node is left in the graph, and the wanted DACS of the input sequences are saved in the end node, thus, no additional operations for searching the DACS are needed, which may save a lot of time. Further, as the number of sequences increases, the dimension of match point 1006 in each node may grow accordingly, and therefore each single node in DACS may take up more space, moreover, comparing two match point may require more time. In addition, the number and length of the sequences may also affect the result DACS: obviously, the longer the sequences are, the longer the result DACS are; conversely, the more the sequences there are, the shorter the result DACS.

At 1112, abstraction may be performed as layer, created for each optimized choice data for the explicit knowledge 212 or the tacit knowledge 214 with the cognitive and context data and may use methods or other methods as described above for the choice of cognitive unaided choice-set on the activity of the user.

At 1114, an abstraction of dynamic and active workspace may be performed, as layer, created for each optimized choice data for the explicit knowledge 212 or the tacit knowledge 214 with the cognitive and context data may use methods as described above for nearest-neighbor or a group or network of the choice data for the group. At 1012, the optimization is applied for a single individual based on individual events and activities, and at 1014 the optimization is performed for a group with aggregated data, such as aggregated probabilities, aggregated features and aggregated optimization, based on aggregated events and activities.

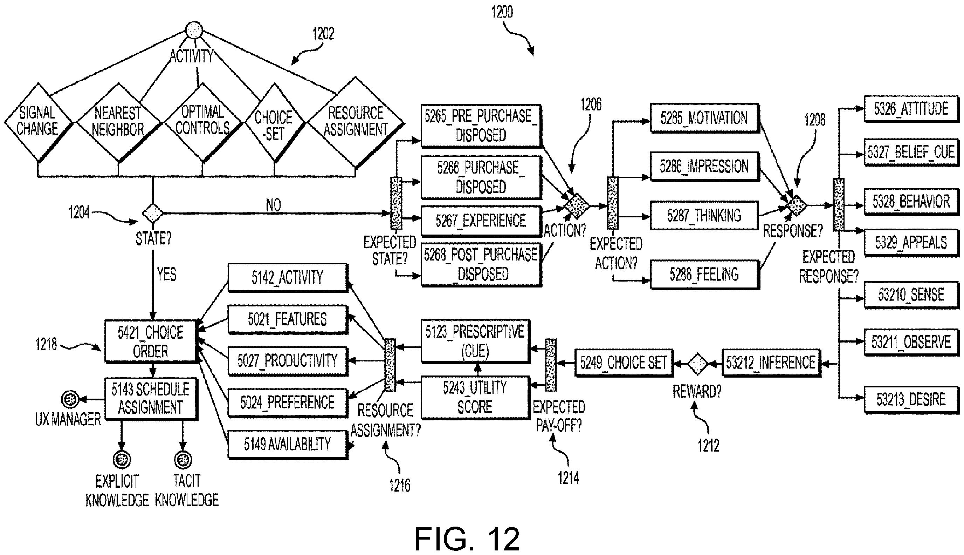

FIG. 12 illustrates a method 1200 of ranking information for dynamic inference engine 508, according to an example embodiment of the present disclosure. In an example, the method 1200 may be executed by the cognitive system 102 for presentation of the plurality of choices for the user and the group. The method 1200 may be operable to provide unfiltered data based on location, nearest-neighbor, optimal controls, choice-sets and resource assignment and behavioral pattern information of the user.

At 1202, user or group signal change data for a particular activity, such as service operation or trading may be determined. The knowledge processor 116 and the access device 104 may detect signal change of its current activity with location and send nearest-neighbor, optimal controls, choice-sets and resource assignment data associated with the activity data to the cognitive operating system 102. For example, the knowledge processor 116 and the access device 104 may transmit activity with location, nearest-neighbors, optimal controls, choice-sets and resource assignment data to the cognitive system 102 using either the integration hub 540 or data receiver 302. The access device 104 may provide activity state information proactively or in response to a request from the cognitive operating system 110. For example, the service operation system, in an airline for an airport, determines a set of features of the user as resource, say value-driver, and customer-relations that a service system dynamically infers for internal or external input.

The cognitive system 102 may further determine state of whether the activity is related to any previous activity performed or status as active, dormant, or states in business function as pre-purchase, buy using the historical tacit knowledge data 214 or a fresh new activity as the explicit knowledge data 212 which may or may not be relevant to the user or the group, at 1204. The determination may be based on the current activity with location, nearest-neighbor, optimal controls, choice-sets and resource assignment of the knowledge processor 116 and the access device 108, the prior state of the user (or machine) as resource and other behavioral information performed by the user, nearest-neighbor or group or network, where user is a member. The cognitive system 102 may be trained further to forecast expected state choices and their priority levels for each state to which associated activity state data may be made available as previously described.

The cognitive system 102 may also determine an action whether the activity is driven by any previous activity ever performed or action as commute, or search or action drivers in business function as motivation, thinking, related to the user or group activities, such as business travel or holiday shopping using the historical tacit knowledge data 214 or the fresh new activity as the explicit knowledge data 212 which may or may not be relevant to the user or the group, at 1206. This determination may be based on the current activity with location, nearest-neighbor, optimal controls, choice-sets and resource assignment of the knowledge processor 116 and the access device 108, the prior action of the user as resource and other behavioral information performed by the user, nearest-neighbor or the group. The cognitive operating system 110 may be trained further to forecast expected action choices and their priority levels for each action to which associated activity state data may be made available (1206), as has been previously discussed.

The cognitive system 102 may determine the response whether the activity is related to any previous activity ever performed or a response as duration lifestyle or response drivers in business function as attitude, belief cues related to the user or the group activities based on the historical tacit knowledge data 214 or the fresh new activity as explicit knowledge data 212 which may or may not be relevant to the user or the group, at 1208. This determination may be based on the current activity with location, nearest-neighbor, optimal controls, choice-sets and resource assignment of the knowledge processor 116 and the access device 104, the prior response of the user as resource and other behavioral information performed by the user, nearest-neighbor or the group. At 1208, expected response choices and their priority levels for each response to which associated activity state data may be made available may be trained for forecast. At 1210, expected response is determined.

The inference dynamic engine 508 in the cognitive operating system 110 may determine the reward of whether the activity is related to any previous activity ever performed or reward as discount, future value, or rewards drivers in business function as options, choice-sets related to the user or the group activities using the historical tacit knowledge data 214 or the fresh new activity as the explicit knowledge data 212 which may or may not be relevant to the user or the group, at 1212. This determination may be based on the current activity with location, nearest-neighbor, optimal controls, choice-sets and resource assignment of the knowledge processor 116 and the access device 108, the prior response of the user as resource and other behavioral information performed by the user, nearest-neighbor or the group. The cognitive system 102 may be trained further to forecast expected reward choices and their priority levels for each reward to which associated activity state data may be made available, at 1212.

The inference dynamic engine 508 in the cognitive operating system 110 may further be trained to determine expected pay-off for the list of choice-set for each reward associated with each action for the next activity or event to be performed by the user or the nearest-neighbor or the group using the historical tacit knowledge data 214 or the fresh new activity as the explicit knowledge data 212, on activity content, at 1214. This determination may be based on the current activity with location, nearest-neighbor, optimal controls, choice-sets and resource assignment of the knowledge processor 116 and the access device 104, the prior expected pay-off of the user or the machine as resource and other behavioral information performed by the user, the nearest-neighbor or the group. The different options may be targeted by one or more targeting methods. The list of options or choices may be supplemented with a utility score of trade-off analyses for each option, which may be related to the current or next activity. The cognitive operating system 110 may be trained further to forecast expected pay-off choices and their priority levels for each reward to which associated activity state data may be made available, at 1214.

Furthermore, the inference dynamic engine 508 in the cognitive operating system 110 may use various optimization methods to identify the preferred sequence of the plurality of choices for allocation and assignment at 1216 for the user or the nearest neighbor or the group. The determination is based on aggregate data at a group or sub-group level of users or machines as resource performing similar activities in the same or proximate location. For example, the service system of an airline at the airport assigns and allocates users or machine as resource for various stations or counters, such as check-in, baggage, ticketing, security, passport controls, gate, for a traveler.

The inference dynamic engine 508 in the cognitive operating system 110 may further determine the choice order as ranking based on importance of various factors including, but not limited to, activity, proficiency, productivity, availability, and expected pay-off. if the allocation and assignment pertaining to a choice is optimal for the expected reward, such as sales realization, at 1218. The cognitive operating system 110 may be trained further to generate choice order and their priority levels for each user allocation and assignment to which associated activity data stored in the database 118 and the cognitive and context database 120 may be made available, at 1218.

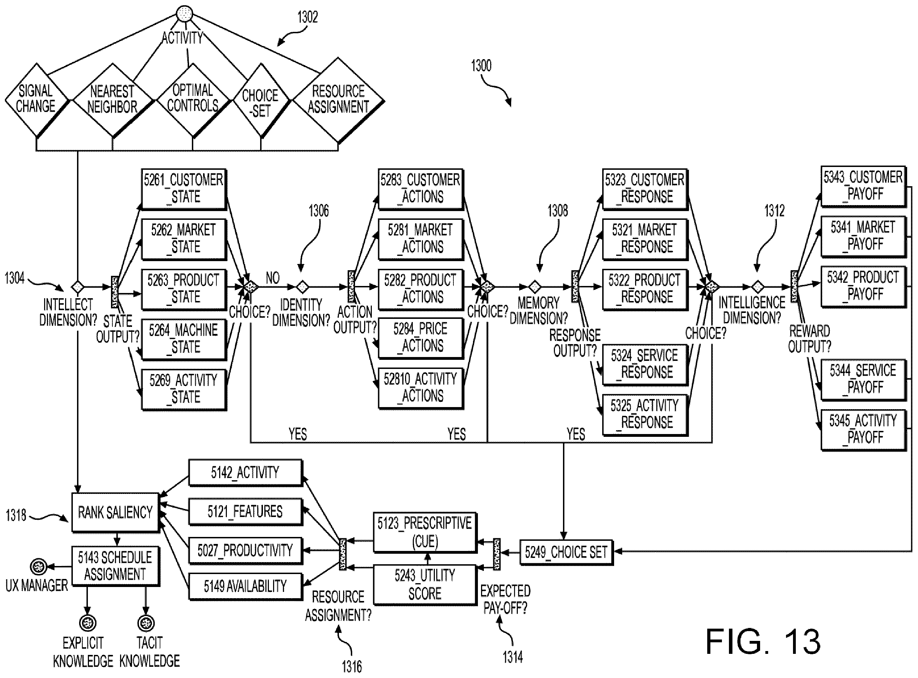

FIG. 13 illustrates a method 1300 for determining salient rank order information for cognitive unaided choice engine 506, according to an embodiment of the present disclosure. The method 1300 may be executed by the cognitive operating system 110 for the presentation of the plurality of unaided choices for the user and the group. The method 1300 may be operable to provide unfiltered data based on location, nearest-neighbor, optimal controls, choice-sets and resource assignment and behavioral pattern information of the user.

At 1302, a user or group signal change data for a particular activity, such as manufacturing or retail 1302 may be determined. In an example, the knowledge processor 116 and the access device 104 may detect signal change of its current activity with location and send nearest-neighbor, optimal controls, choice-sets and resource assignment data associated with the activity data to the cognitive operating system 110. For example, a knowledge processor 116 and the access device 104 may transmit activity with location, nearest-neighbor, optimal controls, choice-sets and resource assignment data to the cognitive operating system 110 using either the integration hub 552 or data receiver 558. The access device 108 may provide activity state information proactively or in response to a request from the cognitive operating system 110. For example, the manufacturing system, in a high-tech assembly, determines a set of skills and features of the user or the machine as resource, as quality-driven, precise and calibrated that the manufacturing system dynamically infers for internal or external input.

The cognitive system 102 may further determine intellect dimensions that includes whether the activity is related to any previous activity ever performed to derive unaided choice-set for the state output as in business function as pre-purchase, buy, related to the user or the group. This may be performed using the historical tacit knowledge data 214 or the fresh new activity as the explicit knowledge data 212 which may or may not be relevant to the user or the group at 1304. This determination may be based on the current activity with the location, the nearest-neighbor, the optimal controls, the choice-sets and the resource assignment of the knowledge processor 116 and the access device 104. The prior state of the user as resource and other behavioral pattern information performed by the user, nearest-neighbor or group or network, where user is a member. The cognitive system 110 may be trained further to forecast expected state outputs and their priority levels for each state to which associated activity state data may be made available at 1304.

The cognitive system 110 may determine identity dimensions whether the activity is driven by any previous activity ever performed to derive unaided choice-set for the action output as in business function as order, shipping, related to user or group activities, such as size, color using the historical tacit knowledge data 214 or the fresh new activity as the explicit knowledge data 212 which may or may not be relevant to the user or the group at 1306. The determination may be based on the current activity with the location, the nearest-neighbor, the optimal controls, the choice-sets and the resource assignment of the knowledge processor 116 and the access device 104, for a prior action of the user or the machine as resource and other behavioral pattern information performed by the user, the nearest-neighbor or the group. The cognitive system 102 may be trained further to forecast action outputs and their priority levels for each action to which associated activity state data may be made available at 1306.

The cognitive system 102 may determine memory dimensions that whether the activity is related to any previous activity ever performed to derive unaided choice-set for the response output in business function as frequent recognized related to the user or the group activities, such as recent, long-time using the historical tacit knowledge data 214 or the fresh new activity as the explicit knowledge data 212 which may or may not be relevant to the user or the group, at 1308. The determination may be based on the current activity with the location, the nearest-neighbor, the optimal controls, the choice-sets and the resource assignment of the knowledge processor 116 and the access device 104. The prior response of the user as resource and other behavioral pattern information performed by the user, the nearest-neighbor or the group. The cognitive system 102 may be trained further to forecast response outputs and their priority levels for each response to which associated activity state data may be made available at 13 08. At 1310, response output is determined.

The cognitive system 102 may determine the intelligence dimensions that whether the activity is related to any previous activity ever performed to derive unaided choice-set for the reward outputs in business function as value, and discount. This may be related to the user or the group activities, such as qualified, smart, using the historical tacit knowledge data 214 or the fresh new activity as the explicit knowledge data 212 which may or may not be relevant to the user or the group, at 1312. The determination may be based on the current activity with the location, the nearest-neighbor, the optimal controls, the choice-sets and the resource assignment of the knowledge processor 116 and the access device 104, the prior response of the user as resource and other behavioral pattern information performed by the user, the nearest-neighbor or the group. The cognitive system 102 may be trained further to forecast reward outputs and their priority levels for each reward to which associated activity state data may be made available at 1312.

The cognitive unaided choice engine 506 in the cognitive operating system 110 may further be trained to determine expected pay-off for the list of choice-set for each reward associated to each action for the next activity or event to be performed by the user or the nearest-neighbor or the group. This may be performed using the historical tacit knowledge data 214 or the fresh new activity as the explicit knowledge data 212, on the activity content, at 1314. The determination may be based on the current activity with the location, the nearest-neighbor, the optimal controls, the choice-sets and the resource assignment of the knowledge processor 116 and the access device 104. The prior expected pay-off of the user as resource and other behavioral pattern information may be performed by the user, the nearest-neighbor or the group. The different options may be targeted by one or more targeting methods. The list of options may be supplemented with the utility score of trade-off analyses for each option, which may be related to the current or the next activity, such as the accept gate counter at the airport. The cognitive system 102 may be trained further to forecast expected pay-off choices and their priority levels for each reward to which associated activity state data may be made available at 1314.

Furthermore, the cognitive unaided choice engine 506 in the cognitive operating system 110 may use various optimization methods, as described in the method 1100 to identify preferred sequence of the plurality of choices for allocation and assignment at 1316 for the user or the nearest neighbor or the group. This determination is based on aggregate data at a group or sub-group level of users as resource performing similar activities in the same or proximate location. For example, the manufacturing system of high-tech assembly assigns and allocates users or machines as resource for various stations or production lines, such as parts, housing, power, maintenance, accessories, packaging, etc. for a product development.

The cognitive unaided choice engine 506 in the cognitive operating system 110 may further determine the rank saliency for unaided choice-set based on importance of various factors including, but not limited to, activity, proficiency, productivity, availability, expected pay-off, when the allocation and assignment pertaining to a choice may or may not be optimal for the expected reward, such as an inventory cycle, at 1318. The cognitive system 102 may be trained further to generate rank saliency and their priority levels for each user allocation and assignment to which associated activity data stored in the database 118 as well as the cognitive and context database 120 may be made available at 1318.

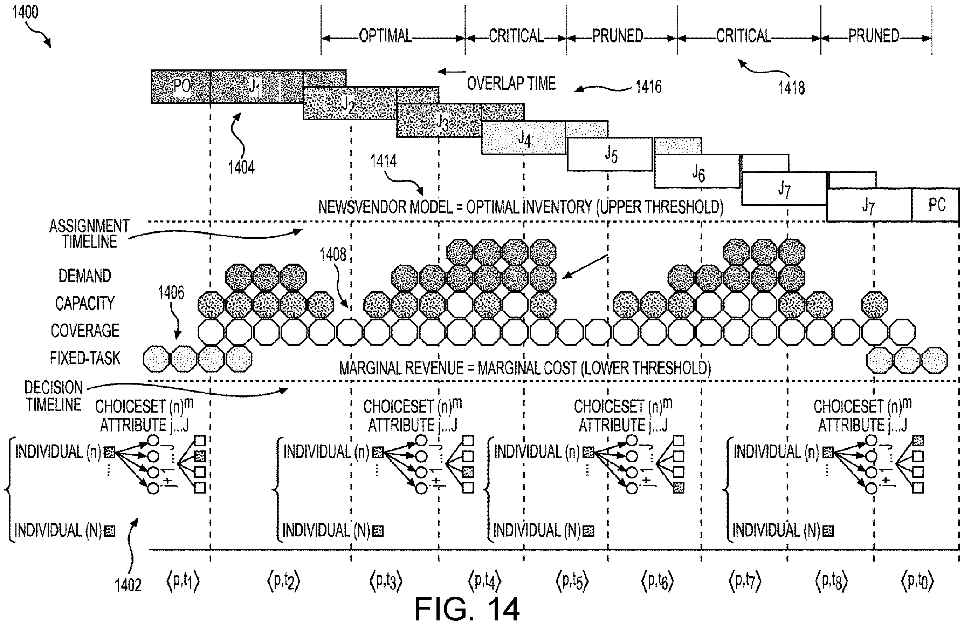

FIG. 14 illustrates an example schedule for allocation and assignment of the user or a machine as a resource, according to an example embodiment of the present disclosure. The schedule illustrate that the user's choices in the choice-set and other information may be entered and that the information may be sent to the cognitive system 102 and used for schedule assignment. For example, the user may use the access device 104 to provide skills or feature, proficiency, station preference and availability information related to a service and mode of operation, and that information may be transmitted to the cognitive system 102 to generate an optimal assignment to the access device 104 or other access devices.

The choice set 1402 may include a plurality of choices for the user having the assignment 1400. For instance, the plurality of choices may include information about an assignment and decision timelines 1404 and a fixed resource assignment 1406, assignment for coverage of all stations 1408, assignment 1410 for capacity of selective stations 1412, optimal controls given as upper and lower thresholds 1414 and overlapping time between resources as layers 1416 and output of inference dynamics engine 508 and cognitive unaided choice engine 506 as inference at 1418. In an embodiment, the plurality of choices may be determined from the historical tacit knowledge data 214 and the current explicit knowledge data 212 and may be presented to the access device 104. In an example, the cognitive system 102 may determine the activity of the plurality of choices from an external device provided in the intelligent assignment 1400. The plurality of choices may be predicted and confirmed. For example, a plurality of choices may be sent for intelligent assignment 1400 to request that the user confirm the current schedule assignment and confirm allocation of a target station or cell for next activity of the user.

The transactional data stored in the database 118 in addition to cognitive and context data may be determined by the intelligent assignment 1400. For example, time, weather, events, etc., may be sent along with activity associated with cognitive and context data for the user to the cognitive system 102. This enables the user to search data in addition to unfiltered data that may be determined by the knowledge processor 116. For example, previous tacit knowledge on travel history, map O-D locations, visits to a shop, etc., may be sent along with activity associated with current explicit knowledge on location, event, friends, etc. for the user to the cognitive operating system 102.

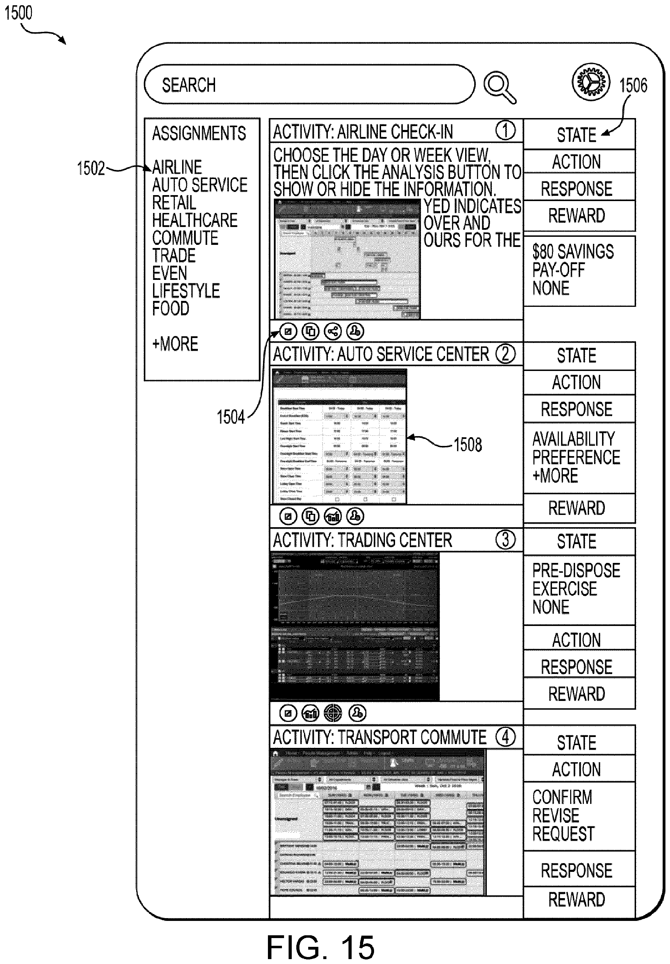

FIG. 15 illustrates a list view of an unfiltered assignment data that may be ranked by the cognitive system 102 and may be selected by the user, according to an example embodiment of the present disclosure. This information may be predicted by the cognitive system 102 and unfiltered data may be generated to request confirmation of the forecast, optimization, prescriptive and assignment for the activity. For example, the cognitive system 102 may predict that the user is checking the workplace assignment and the screen may display airline at 1502 and the user may view nearest-neighbor, optimal controls, choice-sets, and station assignments to confirm or indicate a different sequence as an action at 1504 and thereby expected response and rewards are generated. This also shows the group's unfiltered data as well as nearest-neighbor of state, actions, response and reward in the current explicit knowledge 212 and the historical tacit knowledge 214 at 1506 with the cognitive and context data for the activity in other occasions and situations. The cognitive system 102 may use graph, text, audio, video and other methods to render group's actions options as inference and cognitive unaided choice-set. The cognitive system 102 may also display the action of similar activities in other groups, when the user is at a current activity, such as airline, workplace at 1502 and the user's next activity, such as auto service may be displayed at 1508. The unfiltered data may be based on the intelligent assignment 1400 and previous user settings and/or may be forecasted, optimized, prescribed or assigned from the historical tacit knowledge data.

The cognitive operating system 110 may associate the knowledge processor 116 content with location nearest-neighbor, optimal controls, choice-sets, and assignments data and other information. For example, the knowledge processor 116 may be used to create content using the access device 104, and the geographic location of the access device 104. The content created by the knowledge processor 116 may be used to create a geo-tag that is associated with the content. The knowledge processor 116 may associate other information with the content, including, but not limited to, timestamps, such as time and date of creating the content, user identifiers, such as an identifier for the user associated with the access device 104 and the user who created the content, and content descriptions or type identifiers, such as a photograph content-type identifier. The other information, once associated with the knowledge processor 116 content, may be referred to as other tag data. The geo tag data and the other tag data associated with the content may be utilized for selective retrieval and distribution.

The knowledge processor 116 content may provide the user of the access device 104 with a capability of varieties of activity including but limited to activating, creating, publishing, enabling, accessing a content at a specific location within the network. In an example, the user with a knowledge processor 116 may be physically located at a workplace particular geographic location within the activity 1510. The user may utilize the knowledge processor 116 to create the content, such as searching for nearest restaurant. The content, such as an image file of a restaurant may be already stored in the cognitive and context database 120. The knowledge processor 116 may recognize an activity content creation event and instruct the cognitive operating system 110 to detect the geographic location of the action on the unfiltered data. The cognitive operating system 110 may detect the geographic location and provide location of the access device 104 for associating the location with the cognitive and context data and provides the content, associated geo-tag data, and optionally other associated tag data to the cognitive operating system 110.

What has been described and illustrated herein are examples of the present disclosure. The terms, descriptions and figures used herein are set forth by way of illustration only and are not meant as limitations. Many variations are possible within the spirit and scope of the disclosure, which is intended to be defined by the following claims and their equivalents in which all terms are meant in their broadest reasonable sense unless otherwise indicated.

**Claims**

1. A cognitive system comprising:

   a knowledge processor comprising a cognitive operating system;
   a data receiver, coupled to the knowledge processor, to receive data from an access device for an action, the data comprising transactional data associated with contextual information of the action;
   a scheduler, coupled to the knowledge processor, to:

      capture cognitive and context data from the data, the cognitive and context data indicative of at least one of a timestamp, context and objective associated with the action;
      perform an activity in response to the action; and
      render activity data associated with the activity, the activity data indicative of details of the activity;

   an activity monitor to detect a change in one of the action and the activity; and
   a forecaster, coupled to the knowledge processor, to predict a plurality of options for a target activity to be performed in response to the change, the plurality of options comprising a state of a user, an action to be taken by the user, an expected response for the action taken, and a reward for the activity;
   a trade-off analyzer coupled to the knowledge processor to perform analysis on the data and the activity data and determine utility for each of the plurality of options as an outcome; and
   a prescriptive engine, coupled to the knowledge processor, to identify an option from amongst the multiple options as a target activity to be performed in response to the change.

2. The cognitive system as claimed in claim 1 comprising:

   a causal determiner, coupled to the knowledge processor, to determine one or more causes of the change based on the cognitive and context data;
   a latent feature learner coupled to the knowledge processor, to arrange the plurality of options in a multi-layered structure and fetch additional features for each of the plurality of options;
   a probabilities generator to determine a probability of success for each of the plurality of options; and
   an optimizer, coupled to the knowledge processor, to optimize the plurality of options for the user.

3. The cognitive system as claimed in claim 2, wherein the prescriptive engine is to:

   receive information for at least one of the one or more causes from the causal determiner, the additional features from the latent feature learner, the probability of success for each of the plurality of options from the probabilities generator, the optimized plurality of options from the optimizer, and the utility of the plurality of options from the tradeoff analyzer; and
   select the option from amongst the multiple options to be the target activity based on the information and the cognitive and context data.

4. The cognitive system as claimed in claim 1 comprising an assignment engine to assign resources for tasks to be performed for the target activity.

5. The cognitive system as claimed in claim 1 further comprising:

   a state identifier, coupled to the knowledge processor, to determine a state of the user based on at least one of the plurality of options, the optimized plurality of options, the target activity, and the resources;
an action indicator, coupled to the knowledge processor, to indicate a responsive action to be taken based on the state of the user, the plurality of options, the optimized plurality of options, the target activity, and the resources;
a response provider coupled to the knowledge processor, to provide a response based on the responsive action, the plurality of options, the optimized plurality of options, the target activity, and the resources; and
a reward identifier to identify a reward to be provided based on the responsive action, the plurality of options, the optimized plurality of options, the target activity, and the resources on activity of the user.

6. The cognitive system as claimed in claim 5, wherein the action indicator is to:

calculate a utility for each option based on a plurality of attributes, and the additional features associated with the responsive action; and
determine a utility probability based on utility of the user performing the action at a particular time, and optimizing factors.

7. The cognitive system as claimed in claim 5, wherein the action indicator is to:

model the user as a data point based on a location, a nearest-neighbor, an optimal control, the plurality of options and the resources;
associate the data point with the cognitive and context data;
collect multiple data points for multiple users to form groups of the users; and
determine a cognitive and context dataset including multiple options based on the plurality of options, the optimized plurality of options, the target activity, and the resources for a group of users of which the user is a member.

8. The cognitive system as claimed in claim 1, comprising

an explicit knowledge library, coupled to the knowledge processor, to store current activity data associated with the cognitive and context data; and
a tacit knowledge library, coupled to the knowledge processor, to store current data associated with the current activity data for the target activity.

9. A method comprising:

receiving, by a knowledge processor of a cognitive system, data from an access device for an action, the data comprising transactional data associated with contextual information of the action;
capturing, by the knowledge processor, cognitive and context data from the data, the cognitive and context data indicative of at least one of a timestamp, context and objective associated with the action;
performing, by the knowledge processor, an activity in response to the action;
detecting, by the knowledge processor, a change in one of the action and the activity;
predicting, by the knowledge processor, a plurality of options for a target activity to be performed in response to the change, the plurality of options comprising to a state of a user, an action to be taken by the user, an expected response for the action taken, and a reward for the activity;
performing, by the knowledge processor, analysis on the data and the activity data and determine utility of each of the plurality of options as an outcome;
ranking, by the knowledge processor, the plurality of options in a sequential order; and
identifying, by the knowledge processor, an option from amongst the multiple options as a target activity to be performed in response to the change.

10. The method as claimed in claim 9, comprising determining, by the knowledge processor, a conditional probability for a user on the option from amongst the plurality of options.

11. The method as claimed in claim 10, wherein determining the conditional probability comprises:

identifying, by the knowledge processor, the additional features associated with each of the plurality of options;
determining, by the knowledge processor, the conditional probability for the user performing a responsive action at a particular time, and optimizing factors for the plurality of options; and

calculating, by the knowledge processor, utility for each of the plurality of options based on the additional features and the conditional probability.

12. The method as claimed in claim 11, wherein determining the conditional probability is further based on a self-organized cognitive algebraic neural network (SCANN) technique for the plurality of options, comprising:

accumulating states, responses, and rewards for a plurality of users;
modeling each user from the plurality of users as a data point based on activity, time and location of each user;
identifying groups of users by sheaving the modeled data points;
determining an order of the plurality of options based on the transactional data, the plurality of options, the optimized plurality of options, the target activity and the resources for the user and the group of users of which the user is a member.

13. The method as claimed in claim 9, comprising:

determining, by the knowledge processor, assignment sequence associated with the plurality of options based on the transactional data in inference dynamics and cognitive unaided option conditions; and
transmitting, by the knowledge processor, the plurality of options to an explicit knowledge library and a tacit knowledge library with the cognitive and context data.

14. A non-transitory computer readable medium including machine readable instructions that are executable by a computer processor to:

receive data from an access device for an action, the data comprising transactional data associated with contextual information of the action;
capture cognitive and context data from the data, the cognitive and
context data perform an activity in response to the action;
detect a change in one of the action and the activity; and
predict a plurality of options for a target activity to be performed in response to the change, the plurality of options comprising a state of a user, an action to be taken by the user, an expected response for the action taken, and a reward for the activity;
perform analysis on the data and the activity data and determine utility of each of the plurality of options as an outcome;
rank the plurality of options in a sequential order; and
identify an option from amongst the multiple options as a target activity to be performed in response to the change.

15. The non-transitory computer readable medium as claimed in claim 14 comprising machine readable instructions to determine a conditional probability for a user on the option from the plurality of options.

16. The non-transitory computer readable medium as claimed in claim 14 comprising machine readable instructions to:

determine one or more causes of the change based on the cognitive and context data;
arrange the plurality of options in a multi-layered structure and fetch additional features for each of the plurality of options;
determine a probability of success for each of the plurality of options; and
optimize the plurality of options for a user.

17. The non-transitory computer readable medium as claimed in claim 14 comprising machine readable instructions to:

receive information for at least one of the one or more causes from the causal determiner, the additional features from the latent feature learner, the probability of success for each of the plurality of options from the probabilities generator, the optimized plurality of options from the optimizer, and the utility of the plurality of options from the tradeoff analyzer; and
select the option from amongst the multiple options to be the target activity based on the information and the cognitive and context data.

18. The non-transitory computer readable medium as claimed in claim 14 comprising machine readable instructions to:

determine a state of a user based on at least one of the plurality of options, the optimized plurality of options, the target activity, and the resources;

indicate a responsive action to be taken based on the state of the user, plurality of options, the optimized plurality of options, the target activity, and the resources;

provide a response based on the responsive action, the plurality of options, the optimized plurality of options, the target activity, and the resources; and

identify a reward to be provided based on the responsive action, the plurality of options, the optimized plurality of options, the target activity, and the resources on activity of the user.

19. The non-transitory computer readable medium as claimed in claim 14 comprising machine readable instructions to:

model the user as a data point based on a location, nearest-neighbor, optimal controls, the plurality of options and the resources;

associate the data point with the cognitive and context data;

combine data points for users to form groups of the users; and

determine a cognitive and context dataset containing various options based on the plurality of options, the optimized plurality of options, the target activity, and the resources for a group of users of which the user is a member.

20. The non-transitory computer readable medium as claimed in claim 14 comprising machine readable instructions to store current activity data associated with the cognitive and context data.

FIG. 1

FIG. 2

COGNITIVE SYSTEM 102

KNOWLEDGE PROCESS UNIT
116

DATA RECEIVER
302

SCHEDULER
304

ACTIVITY MONITOR
306

FORECASTER
308

TRADE-OFF ANALYZER
310

PRESCRIPTIVE ENGINE
312

# FIG. 3

FIG. 4

**FIG. 5**

EP 3 706 053 A1

FIG. 6

EP 3 706 053 A1

FIG. 7

FIG. 8

EP 3 706 053 A1

HARDWARE PLATFORM 900

PROCESSOR
905

STORAGE
915

COMPUTER
READABLE
MEDIUM 910

RAM
920

OUTPUT DEVICE
925

INPUT DEVICE
930

DATA SOURCE
945

DATA SOURCE
INTERFACE 940

NETWORK
COMMUNICATOR
935

FIG. 9

EP 3 706 053 A1

FIG. 10

GENERATION OF POSSIBLE RESOURCE CONFIGUTATIONS (FROM 1 RESOURCE, 2 RESOURCES, 3 RESOURCES,..)

| 5 RESOURCES | 1 RESOURCES | 2 RESOURCES | 3 RESOURCES | 4 RESOURCES | 5 RESOURCES |
|---|---|---|---|---|---|
| R1 | R1R2 | R1R2R3 | R1R2R3R4 | R1R2R3R4R5 | |
| R2 | R1R3 | R1R2R4 | R1R2R3R5 | | |
| R3 | R1R4 | R1R2R5 | R1R3R4R5 | | |
| R4 | R1R5 | R1R3R4 | R2R3R4R5 | | |
| R5 | R2R3 | R1R3R5 | | | |
| | R2R4 | R2R3R4 | | | |
| | R2R5 | R2R3R5 | | | |
| | R3R4 | R3R4R5 | | | |
| | R3R5 | | | | |
| | R4R5 | | | | |

1114 GROUP

1112 COGNITIVE UNAIDED CHOICE

1100

**CONDITIONAL DEPENDENCY PROGRAMMING (CDP) IS PERFORMED TO DETERMINE RESOURCE ALLOCATION 1102**

**CHECK NO. OF RESOURCES AVAILABLE**

**DACS WITH SCANN TO OPTIMALLY ALLOCATE RESOURCES FOR STATIONS 1104**

**MATCH STATION ACTIVITY WITH RESOURCE FEATURES**

**ALL RESOURCES ASSIGNED?** — YES / NO

**DACS WITH SCANN TO OPTIMALLY ASSIGN RESOURCES TO STATIONS BASED ON MATCHING-POINT 1106**

**SCHEDULE FOR EACH RESOURCE TO STATION IN OPTIMAL SEQUENCE AND STORED AS TACIT KNOWLEDGE 1108**

1104
1106
1108

$$f(\overline{P_{i,k}}) = \frac{\Gamma(\alpha_{i,k}+\beta_{i,k}+1)}{\Gamma(\alpha_{i,k}+0.5)\Gamma(\beta_{i,k}+0.5)} P_{i,k}{}^{\alpha_{i,k}-0.5}(1-P_{i,k})^{-\beta_{i,k}-0.5}$$

$$(\otimes Q)(\chi) = \frac{\max}{p\varepsilon\Pi(A)}\frac{\min}{b\varepsilon B}\Sigma_{a\varepsilon A}p[a]\,Q(\chi,(a,b));$$

$$(\oplus V)(\chi,(a,b)) = \Sigma_{y\varepsilon X}P(\chi,(a,b),y)V(y)$$

# FIG. 11

EP 3 706 053 A1

FIG. 12

FIG. 13

FIG. 14

1500

SEARCH

1506

| ASSIGNMENTS | ACTIVITY: AIRLINE CHECK-IN ① | STATE |
|---|---|---|
| | CHOOSE THE DAY OR WEEK VIEW, THEN CLICK THE ANALYSIS BUTTON TO SHOW OR HIDE THE INFORMATION. | ACTION |
| AIRLINE | | RESPONSE |
| AUTO SERVICE | | REWARD |
| RETAIL | YED INDICATES | |
| HEALTHCARE | OVER AND | $80 SAVINGS |
| COMMUTE | OURS FOR THE | PAY-OFF |
| TRADE | | NONE |
| EVEN | | |
| LIFESTYLE | | |
| FOOD | | |
| | | |
| +MORE | | |

1502

1504

| | ACTIVITY: AUTO SERVICE CENTER ② | STATE |
|---|---|---|
| | | ACTION |
| | | RESPONSE |
| | | AVAILABILITY PREFERENCE +MORE |
| | 1508 | |
| | | REWARD |

| | ACTIVITY: TRADING CENTER ③ | STATE |
|---|---|---|
| | | PRE-DISPOSE EXERCISE NONE |
| | | ACTION |
| | | RESPONSE |
| | | REWARD |

| | ACTIVITY: TRANSPORT COMMUTE ④ | STATE |
|---|---|---|
| | | ACTION |
| | | CONFIRM REVISE REQUEST |
| | | RESPONSE |
| | | REWARD |

# FIG. 15

Europäisches
Patentamt
European
Patent Office
Office européen
des brevets

# EUROPEAN SEARCH REPORT

Application Number

EP 20 16 1172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/052681 A1 (NITZ KENNETH C [US] ET AL) 20 February 2014 (2014-02-20) * paragraphs [0023] - [0025], [0053] - [0056], [0096] - [0115] * | 1-20 | INV. G06Q10/06 G06Q50/30 G06Q10/10 |
| A | US 2013/295963 A1 (SEN PRABIR [US]) 7 November 2013 (2013-11-07) * paragraphs [0036] - [0038], [0050], [0064] * | 7,12,19 | |
| A | US 2012/110579 A1 (BULLEN GEOFFREY NORMAN [DK]) 3 May 2012 (2012-05-03) * paragraph [0022] * | 10,15 | |

TECHNICAL FIELDS
SEARCHED     (IPC)

G06Q
G06N

The present search report has been drawn up for all claims

| Place of search | Date of completion of the search | Examiner |
|---|---|---|
| Munich | 20 May 2020 | Hopper, Eva |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 16 1172

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2020

| Patent document cited in search report | | Publication date | Patent family member(s) | | Publication date |
|---|---|---|---|---|---|
| US 2014052681 | A1 | 20-02-2014 | US | 2014052681 A1 | 20-02-2014 |
| | | | US | 2015213371 A1 | 30-07-2015 |
| US 2013295963 | A1 | 07-11-2013 | AU | 2013205716 A1 | 21-11-2013 |
| | | | CA | 2815122 A1 | 07-11-2013 |
| | | | SG | 195395 A1 | 30-12-2013 |
| | | | US | 2013295963 A1 | 07-11-2013 |
| | | | US | 2015220952 A1 | 06-08-2015 |
| US 2012110579 | A1 | 03-05-2012 | CN | 102436606 A | 02-05-2012 |
| | | | EP | 2633483 A1 | 04-09-2013 |
| | | | US | 2012110579 A1 | 03-05-2012 |
| | | | WO | 2012161725 A1 | 29-11-2012 |

For more details about this annex : see Official Journal of the European Patent Office, No. 12/82